(19) **Europäisches Patentamt European Patent Office Office européen des brevets**

(11) **EP 3 880 739 B1**

(12) **EUROPEAN PATENT SPECIFICATION**

(45) Date of publication and mention
of the grant of the patent:
**19.03.2025  Bulletin 2025/12**

(51) International Patent Classification (IPC):
**C08J 5/18** (2006.01)   **C08L 23/08** (2025.01)

(52) Cooperative Patent Classification (CPC):
(C-Sets available)
**C08L 23/0815; C08J 5/18;** C08J 2323/08;
C08J 2423/08; C08L 2203/16; C08L 2205/025
(Cont.)

(21) Application number: **19817049.0**

(22) Date of filing: **13.11.2019**

(86) International application number:
**PCT/US2019/061224**

(87) International publication number:
**WO 2020/102385 (22.05.2020 Gazette 2020/21)**

(54) **POLYETHYLENE FILMS**

POLYETHYLENFILME

FILMS DE POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.11.2018  US 201862760282 P**

(43) Date of publication of application:
**22.09.2021  Bulletin 2021/38**

(73) Proprietor: **ExxonMobil Chemical Patents Inc.**
**Baytown, TX 77520-2101 (US)**

(72) Inventors:
• **LUE, Ching-Tai**
**Garland, TX 77479 (US)**
• **LI, Dongming**
**Houston, TX 77059 (US)**
• **YOTT, Matthew, F.**
**Dayton, TX 77535 (US)**
• **LEYVA, Arturo**
**League City, TX 77573 (US)**
• **SILVA, Adriana, S.**
**Houston, TX 77006 (US)**
• **HOLTCAMP, Matthew, W.**
**Huffman, TX 77336 (US)**
• **IMPELMAN, Ryan, W.**
**Houston, TX 77044 (US)**
• **PEQUENO, Richard, E.**
**Baytown, TX 77521 (US)**
• **MCCULLOUGH, Laughlin, G.**
**League City, TX 77573 (US)**
• **RANGWALLA, Hasnain**
**Katy, TX 77450 (US)**
• **FARLEY, James, M.**
**League City, TX 77573 (US)**

(74) Representative: **ExxonMobil Petroleum & Chemical BV**
**IP Law Europe**
**Hermeslaan 2**
**1831 Machelen (BE)**

(56) References cited:
**WO-A1-2014/088827      WO-A1-2016/089495**
**WO-A1-98/21274      US-A- 5 747 594**
**US-A1- 2018 305 530**

(52) Cooperative Patent Classification (CPC): (Cont.)

C-Sets
**C08L 23/0815, C08L 23/04;**
**C08L 23/0815, C08L 23/06**

**Description**

## FIELD OF THE INVENTION

The present disclosure relates to polyethylene films, and more particularly relates to blown films of polyethylene blends having improved properties.

## BACKGROUND OF THE INVENTION

The trade-off paradigm of various film performance attributes can be a major hurdle to overcome in developing new applications for linear low density polyethylene ("LLDPE") films. Blown films are often manufactured in a high speed, continuous extrusion process. During the process, a blown film is subjected to various mechanical forces immediately after extrusion and before the film has had time to cool. In addition, after cooling, blown films are further subjected to a plethora of mechanical forces over their lifetime. Hence, stiffness and sealing properties are critical to a LLDPE blown film.

Two important parameters used in determining film stiffness and sealing properties are secant modulus and seal initiation temperature ("SIT"). Secant modulus is a measure of the strength characteristics in the film's elastic region and represents the actual deformation at a selected point on the stress-strain curve. As a result, secant modulus provides valuable insight into stiffness and resistance to elongation in use, or, how extensible the film is under normal use tensions. Likewise, seal initiation temperatures (both hot tack and heat seal) can have a measurable effect on production costs because a higher seal initiation temperature requires a larger amount of energy input to the process.

To improve stiffness and sealing of a LLDPE film, two or more polyethylene compositions can be blended. When blending two polyethylene compositions of different density, however, as the density difference between the polyethylene compositions increases, the resulting film stiffness increases but does so at the cost of poorer heat sealing performance. Further, increasing a density spread between the polyethylene compositions (the difference in density between the polyethylene compositions) typically results in a larger secant modulus of elasticity, and higher heat and hot tack seal initiation temperatures. WO 98/21274 A1 relates to sealant film compositions comprising at least two ethylene polymer component materials. US 5,747,594 A discloses a polymer mixture comprised of at least one first substantially linear ethylene polymer, Component A, and at least one second ethylene polymer which is a homogeneously branched polymer, heterogeneously branched linear polymer or a non-short chain branched linear polymer.

A need exists, therefore, for polyethylene blends which provide improved stiffness in films, such as blown films, without sacrificing heat sealing performance.

## SUMMARY OF THE INVENTION

Provided herein are blown films as described in the attached claims.

In an aspect, the polyethylene blend has a melt index ratio ("MIR") between about 15 and about 25.

In an aspect, each of the polyethylene compositions has an $M_w/M_n$ between about 2.4 and about 3.4. In an aspect, each of the polyethylene compositions has an $M_z/M_w$ between about 1.7 and about 2.3.

In an aspect, one of the polyethylene compositions of the polyethylene blend has a density of about 0.8961 g/cm$^3$ and the other polyethylene composition has a density of about 0.9510 g/cm$^3$. In an aspect, the polyethylene blend can comprise a polyethylene composition having a density of about 0.8961 g/cm$^3$ in an amount between about 55 wt% and about 57 wt%. In an aspect, the polyethylene blend comprises the polyethylene composition having a density of about 0.9510 g/cm$^3$ in an amount between about 43 wt% and about 45 wt%. In an aspect, the polyethylene composition having a density of about 0.8961 g/cm$^3$ has an MI ($I_2$) of about 0.3 g/10 min. In an aspect, the polyethylene composition having a density of about 0.9510 g/cm$^3$ has an MI ($I_2$) of about 15.0 g/10 min.

In an aspect, one of the polyethylene compositions of the polyethylene blend has a density of about 0.8949 g/cm$^3$ and the other polyethylene composition has a density of about 0.9518 g/cm$^3$. In an aspect, the polyethylene blend comprises the polyethylene composition having a density of about 0.8949 g/cm$^3$ in an amount between about 53 wt% and about 55 wt%. In an aspect, the polyethylene blend comprises the polyethylene composition having a density of about 0.9518 g/cm$^3$ in an amount between about 45 wt% and about 47 wt%. In an aspect, the polyethylene composition having a density of about 0.8949 g/cm$^3$ has an MI ($I_2$) of about 1.0 g/10 min. In an aspect, the polyethylene composition having a density of about 0.9518 g/cm$^3$ has an MI ($I_2$) of about 0.9 g/10 min.

In an aspect, one of the polyethylene compositions of the polyethylene blend has a density of about 0.8983 g/cm$^3$, and the other polyethylene composition has a density of about 0.9516 g/cm$^3$. In an aspect, the polyethylene blend comprises the polyethylene composition having a density of about 0.8983 g/cm$^3$ in an amount between about 56 wt% and about 58 wt%. In an aspect, the polyethylene blend comprises the polyethylene composition having a density of about 0.9516 g/cm$^3$ in an amount between about 42 wt% and about 44 wt%. In an aspect, the polyethylene composition having a density of about 0.8983 g/cm$^3$ has an MI ($I_2$) of about 8.0 g/10 min. In an aspect, the polyethylene composition having a density of about 0.9516 g/cm$^3$ has an MI (I$_2$) of about 0.2 g/10 min.

## BRIEF DESCRIPTION OF THE DRAWINGS

FIG. 1 is a plot showing the density and MI (I$_2$) of the polyethylene compositions used as components in the inventive polyethylene blends.

FIG. 2A is a plot showing the average MD/TD 1% secant modulus and heat seal initiation temperature at 5 N for the inventive polyethylene blends.

FIG. 2B is a plot showing the average MD/TD 1% secant modulus and hot tack seal initiation temperature at 1 N for the inventive polyethylene blends.

FIG. 3A is a plot showing heat seal strength as a function of seal temperature for the inventive polyethylene blends.

FIG. 3B is a plot showing hot tack seal strength as a function of seal temperature for the inventive polyethylene blends.

## DESCRIPTION OF THE PREFERRED EMBODIMENTS

For the purposes of this disclosure, the following definitions will apply:

As used herein, the terms "a" and "the" as used herein are understood to encompass the plural as well as the singular.

The term "alpha-olefin" refers to an olefin having a terminal carbon-to-carbon double bond in the structure thereof (R$^1$R$^2$)-C=CH$_2$, where R$^1$ and R$^2$ can be independently hydrogen or any hydrocarbyl group. In an aspect, R$^1$ is hydrogen, and R$^2$ is an alkyl group. A "linear alpha-olefin" is an alpha-olefin as defined in this paragraph wherein R$^1$ is hydrogen, and R$^2$ is hydrogen or a linear alkyl group.

The term "broad orthogonal comonomer distribution" ("BOCD") is used herein to mean across the molecular weight range of the ethylene polymer, comonomer contents for the various polymer fractions are not substantially uniform and a higher molecular weight fraction thereof generally has a higher comonomer content than that of a lower molecular weight fraction. Both a substantially uniform and an orthogonal comonomer distribution may be determined using fractionation techniques such as gel permeation chromatography-differential viscometry (GPC-DV), temperature rising elution fraction-differential viscometry (TREF-DV) or cross-fractionation techniques.

A "catalyst system" as used herein may include one or more polymerization catalysts, activators, supports/-carriers, or any combination thereof.

The terms "catalyst system" and "catalyst" are used interchangeably herein.

The term "composition distribution breadth index" ("CDBI") refers to the weight percent of the copolymer molecules having a comonomer content within 50% of the median total molar comonomer content. The CDBI of any copolymer is determined utilizing known techniques for isolating individual fractions of a sample of the copolymer. Exemplary is Temperature Rising Elution Fraction ("TREF") described in Wild, et al., J. Poly. Sci., Poly. Phys. Ed., Vol. 20, pg. 441 (1982) and U.S. Pat. No. 5,008,204.

As used herein, the term "copolymer" refers to polymers having more than one type of monomer, including interpolymers, terpolymers, or higher order polymers.

The term "C$_n$ group" or "C$_n$ compound" refers to a group or a compound with total number carbon atoms "n." Thus, a C$_m$-C$_n$ group or compound refers to a group or a compound having total number of carbon atoms in a range from m to n. For example, a C$_1$-C$_{50}$ alkyl group refers to an alkyl compound having 1 to 50 carbon atoms.

As used herein, the terms "cyclopentadiene" and "cyclopentadienyl" are abbreviated as "Cp."

All numerical values within the detailed description and the claims herein are modified by "about" or "approximately" the indicated value, taking into account experimental error and variations.

Unless otherwise specified, the term "density" refers to the density of the polyethylene composition or polyethylene blend independent of any additives, such as antiblocks, which may change the tested value.

As used herein, in reference to Periodic Table Groups of Elements, the "new" numbering scheme for the Periodic Table Groups are used as in the CRC HANDBOOK OF CHEMISTRY AND PHYSICS (David R. Lide ed., CRC Press 81st ed. 2000).

As used herein, the term "heat seal initiation temperature" means the temperature at which a heat seal forms immediately after the sealing operation, the strength of the heat seal being measured at a specified time interval (milliseconds) after completion of the sealing cycle and after the seal has cooled to ambient temperature and reached maximum strength. The strength of the seal is often specified - for example, the "heat seal initiation temperature at 5 N" refers to the temperature at which a seal is formed that will have a strength of 5 N after cooling. Heat seal initiation temperature can be measured by ASTM F1921.

As used herein, the term "hot tack seal initiation temperature" means the temperature at which a heat seal forms immediately after the sealing operation, the strength of the heat seal being measured at a specified time interval (milliseconds) after completion of the sealing cycle and before the seal has cooled to ambient temperature and reached maximum strength. The strength of the seal is often specified - for example, the "heat seal initiation temperature at 1 N" refers to the temperature at which a hot 1 N seal is formed. Hot tack seal initiation temperature can be measured by ASTM F1921.

The term "hot Lack" refers to the peel force of a sealing area when it is not completely cooled down. The term "heat seal strength" refers to the peel force when the sealing area is completely cooled down. Hot tack force and heat seal strength of the same material are typically different from each other.

As used herein, the term "linear low density polyethylene" ("LLDPE") means polyethylene having a significant number of short branches. LLDPEs can be distinguished structurally from conventional LDPEs because LLDPEs typically have minimal long chain branching and more short chain branching than LDPEs.

The term "metallocene catalyzed linear low density polyethylene" ("mLLDPE") refers to an LLDPE composition produced with a metallocene catalyst.

The term "linear medium density polyethylene" ("MDPE") refers to a polyethylene having a density from about 0.930 g/cm$^3$ to about 0.950 g/cm$^3$.

As used herein, the term "metallocene catalyst" refers to a catalyst having at least one transition metal compound containing one or more substituted or unsubstituted Cp moiety (typically two Cp moieties) in combination with a Group 4, 5, or 6 transition metal. A metallocene catalyst is considered a single site catalyst. Metallocene catalysts generally require activation with a suitable co-catalyst, or activator, in order to yield an "active metallocene catalyst", i.e., an organometallic complex with a vacant coordination site that can coordinate, insert, and polymerize olefins. Active catalyst systems generally include not only the metallocene complex, but also an activator, such as an alumoxane or a derivative thereof (preferably methyl alumoxane), an ionizing activator, a Lewis acid, or a combination thereof. Alkylalumoxanes (typically methyl alumoxane and modified methylalumoxanes) are particularly suitable as catalyst activators. The catalyst system can be supported on a carrier, typically an inorganic oxide or chloride or a resinous material such as, for example, polyethylene or silica. When used in relation to metallocene catalysts, the term "substituted" means that a hydrogen group has been replaced with a hydrocarbyl group, a heteroatom, or a heteroatom containing group. For example, methylcyclopentadiene is a Cp group substituted with a methyl group.

The term "melt index" ("MI") is the number of grams extruded in 10 minutes under the action of a standard load and is an inverse measure of viscosity. A high MI implies low viscosity and a low MI implies high viscosity. In addition, polymers are shear thinning, which means that their resistance to flow decreases as the shear rate increases. This is due to molecular alignments in the direction of flow and disentanglements.

As provided herein, MI ($I_2$) is determined according to ASTM D-1238-E (190°C/2.16 kg), also sometimes referred to as $I_2$ or $I_{2.16}$.

As provided herein, MI ($I_{21}$) is determined according to ASTM D-1238-E (190°C/21.6 kg), also sometimes referred to as $I_{21}$ or $I_{21.6}$.

The "melt index ratio" ("MIR") provides an indication of the amount of shear thinning behavior of the polymer and is a parameter that can be correlated to the overall polymer mixture molecular weight distribution data obtained separately by using Gel Permeation Chromatography ("GPC") and possibly in combination with another polymer analysis including TREF. MIR is the ratio of $I_{21}/I_2$.

The term "melt strength" is a measure of the extensional viscosity and is representative of the maximum tension that can be applied to the melt without breaking. Extensional viscosity is the polyethylene composition's ability to resist thinning at high draw rates and high draw ratios. In melt processing of polyolefins, the melt strength is defined by two key characteristics that can be quantified in process-related terms and in rheological terms. In extrusion blow molding and melt phase thermoforming, a branched polyolefin of the appropriate molecular weight can support the weight of the fully melted sheet or extruded portion prior to the forming stage. This behavior is sometimes referred to as sag resistance.

As used herein, "$M_n$" is number average molecular weight, "$M_w$" is weight average molecular weight, and "$M_z$" is z-average molecular weight. Unless otherwise noted, all molecular weight units (e.g., $M_w$, $M_y$, $M_z$) including molecular weight data are in the unit of g·mol$^{-1}$.

As used herein, unless specified otherwise, percent by mole is expressed as "mole%," and percent by weight is expressed as "wt%."

Molecular weight distribution ("MWD") is a measure of the spread of a polymer's molecular weight. A given polymer sample comprises molecules of varying chain length, and thus molecular weight, so the molecular weight of a polymer is represented as a distribution rather than as a single value. MWD is typically characterized as "broad" or "narrow." MWD is equivalent to the expression $M_w/M_n$ and is also referred to as polydispersity index ("PDI"). The expression $M_w/M_n$ is the ratio of $M_w$ to $M_n$. $M_w$ is given by

$$M_w = \frac{\sum_i n_i M_i^2}{\sum_i n_i M_i}$$

, $M_n$ is given by

$$M_n = \frac{\sum_i n_i M_i}{\sum_i n_i}$$

,

$M_z$ is given by

$$M_z = \frac{\sum_i n_i M_i^3}{\sum_i n_i M_i^2}$$

,

where $n_i$ in the foregoing equations is the number fraction of molecules of molecular weight $M_i$. Measurements of $M_w$, $M_z$, and $M_n$ are typically determined by Gel Permeation Chromatography as disclosed in Macromolecules, Vol. 34, No. 19, pg. 6812 (2001). The measurements proceed as follows. Gel Permeation Chromatography (Agilent PL-220), equipped with three in-line detectors, a differential refractive index detector ("DRI"), a light scattering (LS) detector, and a viscometer, is used. Experimental details, including detector calibration, are described in: T. Sun, P. Brant, R. R. Chance, and W. W. Graessley, Macromolecules, Volume 34, Number 19, pp. 6812-6820, (2001). Three Agilent PLgel 10$\mu$m Mixed-B LS columns are used. The nominal flow rate is 0.5 mL/min, and the nominal injection volume is 300 $\mu$L. The various transfer lines, columns, viscometer and differential refractometer (the DRI detector) are contained in an oven maintained at 145°C. Solvent for the experiment is prepared by dissolving 6 grams of butylated hydroxytoluene as an antioxidant in 4 liters of Aldrich reagent grade 1,2,4-trichlorobenzene (TCB). The TCB mixture is then filtered through a 0.1 $\mu$m Teflon filter. The TCB is then degassed with an online degasser before entering the GPC-3D. Polymer solutions are prepared by placing dry polymer in a glass container, adding the desired amount of TCB, then heating the mixture at 160°C with continuous shaking for about 2 hours. All quantities are measured gravimetrically. The TCB densities used to express the polymer concentration in mass/volume units are about 1.463 g/ml at about 21°C and about 1.284 g/ml at about 145°C. The injection concentration is from 0.5 to 2.0 mg/ml, with lower concentrations being used for higher molecular weight samples. Prior to running each sample, the DRI detector and the viscometer are purged. The flow rate in the apparatus is then increased to 0.5 ml/minute, and the DRI is allowed to stabilize for 8 hours before injecting the first sample. The LS laser is turned on at least 1 to 1.5 hours before running the samples. The concentration, c, at each point in the chromatogram is calculated from the baseline-subtracted DRI signal, $I_{DRI}$, using the following equation:

$$c = K_{DRI} I_{DRI} / (dn/dc),$$

where $K_{DRI}$ is a constant determined by calibrating the DRI, and (dn/dc) is the refractive index increment for the system. The refractive index, n = 1.500 for TCB at 145°C. Units on parameters throughout this description of the GPC-3D method are such that concentration is expressed in g/cm$^3$, molecular weight is expressed in g/mole, and intrinsic viscosity is expressed in dL/g.

The LS detector is a Wyatt Technology High Temperature DAWN HELEOS. The molecular weight, M, at each point in the chromatogram is determined by analyzing the LS output using the Zimm model for static light scattering (M.B. Huglin, LIGHT SCATTERING FROM POLYMER SOLUTIONS, Academic Press, 1971):

$$\frac{K_o c}{\Delta R(\theta)} = \frac{1}{MP(\theta)} + 2A_2 c .$$

Here, $\Delta R(\theta)$ is the measured excess Rayleigh scattering intensity at scattering angle $\theta$, c is the polymer concentration determined from the DRI analysis, $A_2$ is the second virial coefficient. $P(\theta)$ is the form factor for a monodisperse random coil, and $K_o$ is the optical constant for the system:

$$K_o = \frac{4\pi^2 n^2 (dn/dc)^2}{\lambda^4 N_A},$$

where $N_A$ is Avogadro's number, and (dn/dc) is the refractive index increment for the system, which take the same value as the one obtained from DRI method. The refractive index, n = 1.500 for TCB at 145°C and $\lambda$ = 657 nm. A high temperature Viscotek Corporation viscometer, which has four capillaries arranged in a Wheatstone bridge configuration with two pressure transducers, can be used to determine specific viscosity. One transducer measures the total pressure drop across the detector, and the other, positioned between the two sides of the bridge, measures a differential pressure. The specific viscosity, $\eta_s$, for the solution flowing through the viscometer is calculated from their outputs. The intrinsic viscosity, $[\eta]$, at each point in the chromatogram is calculated from the following equation:

$$\eta_S = c[\eta] + 0.3(c[\eta])^2,$$

where c is concentration and was determined from the DRI output.

The branching index ($g'_{vis}$) is calculated using the output of the GPC-DRI-LS-VIS method as follows. The average intrinsic viscosity, $[\eta]_{avg}$ of the sample is calculated by:

$$[\eta]_{avg} = \frac{\sum c_i [\eta]_i}{\sum c_i},$$

where the summations are over the chromatographic slices, i, between the integration limits.

The branching index $g'_{vis}$ is defined as:

$$g'vis = \frac{[\eta]_{avg}}{kM_v^\alpha}.$$

$M_V$ is the viscosity-average molecular weight based on molecular weights determined by LS analysis. Z average branching index ($g'_{Zave}$) is calculated using $Ci$ = polymer concentration in the slice i in the polymer peak times the mass of the slice squared, $Mi^2$. All molecular weights are weight average unless otherwise noted. All molecular weights are reported in g/mol unless otherwise noted. This method is the preferred method of measurement and used in the examples and throughout the disclosures unless otherwise specified. *See also*, Macromolecules, Vol. 34, No. 19, Effect of Short Chain Branching on the Coil Dimensions of Polyolefins in Dilute Solution, Sun et al., pg. 6812-6820 (2001).

As used herein, the term "olefin" refers to a linear, branched, or cyclic compound comprising carbon and hydrogen and having a hydrocarbon chain containing at least one carbon-to-carbon double bond in the structure thereof, where the carbon-to-carbon double bond does not constitute a part of an aromatic ring. The term olefin includes all structural isomeric forms of olefins, unless it is specified to mean a single isomer or the context clearly indicates otherwise.

As used herein, the term "polymer" refers to a compound having two or more of the same or different "mer" units. A "homopolymer" is a polymer having mer units that are the same. A "copolymer" is a polymer having two or more mer units that are different from each other. A "terpolymer" is a polymer having three mer units that are different from each other. "Different" in reference to mer units indicates that the mer units differ from each other by at least one atom or are different isomerically.

As used herein, the term "comonomer" refers to the unique mer units in a copolymer. Since comonomers in a copolymer have non-identical MWDs, the composition of the copolymer varies at different molecular weights. As with MWD, comonomer composition must be represented as a distribution rather than as a single value. The term "composition distribution," or "comonomer distribution," is a measure of the spread of a copolymer's comonomer composition. Composition distribution is typically characterized as "broad" or "narrow."

As used herein, when a polymer or copolymer is referred to as comprising an olefin, the olefin present in such polymer or copolymer is the polymerized form of the olefin. For example, when a copolymer is said to have a "propylene" content of 35 wt% to 55 wt%, it is understood that the mer unit in the copolymer is derived from propylene in the polymerization reaction and said derived units are present at 35 wt% to 55 wt%, based upon the weight of the copolymer. A copolymer can be terpolymers and the like.

As used herein, the terms "polymerization temperature" and "reactor temperature" are interchangeable.

The term "substantially uniform comonomer distribution" is used herein to mean that comonomer content of the polymer fractions across the molecular weight range of the ethylene-based polymer vary by < 10.0 wt%. In an aspect, a substantially uniform comonomer distribution refers to < 8.0 wt%, < 5.0 wt%, or < 2.0 wt%.

As used herein, the term "supported" refers to one or more compounds that are deposited on, contacted with, vaporized with, bonded to, incorporated within, adsorbed or absorbed in, or on, a support or carrier. The terms "support" and "carrier" can be used interchangeably and include any support material including, but not limited to, a porous support material or inorganic or organic support materials. Non-limiting examples of inorganic support materials include inorganic oxides and inorganic chlorides. Other carriers include resinous support materials such as polystyrene, functionalized or cross-linked organic supports, such as polystyrene, divinyl benzene, polyolefins, or polymeric compounds, zeolites, talc, clays, or any other organic or inorganic support material and the like, or mixtures thereof.

In an extrusion process, "viscosity" is a measure of resistance to shearing flow. Shearing is the motion of a fluid, layer-by-layer, like a deck of cards. When polymers flow through straight tubes or channels, the polymers are sheared and resistance is expressed in terms of viscosity.

"Extensional" or "elongational viscosity" is the resistance to stretching. In fiber spinning, film blowing and other processes where molten polymers are stretched, the elongational viscosity plays a role. For example, for certain liquids, the resistance to stretching can be three times larger than in shearing. For some polymeric liquids, the elongational viscosity can increase (tension stiffening) with the rate, although the shear viscosity decreased.

Various measurements described herein are based on certain test standards. For example, measurements of tensile strength in the machine direction (MD) and transverse direction (TD) are based on ASTM D882. Measurements of Elmendorf tear strength in the machine direction (MD) and transverse direction (TD) are based on ASTM D1922-09. Measurements for 1% secant modulus are based on ASTM D790A. Measurements for puncture resistance are based on ASTM D5748, which is designed to provide load versus deformation response under biaxial deformation conditions at a constant relatively low test speed (change from 250 mm/min to 5 mm/min after reach pre-load (0.1 N)). Measurements of dart-drop are made using ISO 7765-1, method "A". Light transmission percent (or haze) measurements are based on ASTM D1003 using a haze meter Haze-Guard Plus AT-4725 from BYK Gardner and defined as the percentage of transmitted light passing through the bulk of the film sample that is deflected by more than 2.5°.

The "secant modulus" is the slope of a line connecting the origin to an object's stress/strain curve at a specified strain percentage. For example, the "1% secant modulus" is the slope of a line connecting the origin to an object's stress/strain curve at 1% strain. The secant modulus describes the overall stiffness of an object. Lower strain percentages typically approximate elastic behavior more accurately. The secant modulus can be measured by straining an object in the machine direction (MD) or in the transverse direction (TD). The "average MD/TD 1% secant modulus" thus refers to the average of the MD secant modulus and the TD secant modulus at 1% strain. Measurements for 1% secant modulus are based on ASTM D790A.

Blown films made of polyethylene blends are described herein. The polyethylene blends comprise two polyethylene compositions, each polyethylene composition having a density. The difference (or spread) of the densities of the polyethylene compositions is between about 0.050 g/cm$^3$ and about 0.060 g/cm$^3$ and in an aspect, 0.055 g/cm$^3$. As described, a 20 to 30 percent higher modulus along with a 20 to 30°C lower SIT over narrow molecular weight distribution/composition distribution ("NMWD/CD") controls were observed with a delta density (also referred to as density spread) of approximately 0.055 g/cm$^3$. By increasing the density spread between the polyethylene compositions (also referred to sometimes as "components"), secant modulus was found to increase along with a decrease of initiation temperature (for heat seal and hot tack) which is against the conventional wisdom of increasing modulus at the expense of higher seal initiation. Broadening the composition distribution and specific molecular weight distribution appears to lead to a combination of desirable attributes in the film produced. Also, maximum hot tack strength was found to be dependent on the narrow molecular weight distribution/composition distribution, such as a BOCD of 2 to 3 times higher than conventional composition distribution.

The present films have an average MD/TD 1% secant modulus greater than or equal to about 3300 psi and a hot tack seal initiation temperature at 1 N of less than or equal to about 95°C and as described in the examples below. In an aspect, the films have an average MD/TD 1% secant modulus greater than or equal to about 3400 psi, a heat seal initiation temperature at 5 N of less than or equal to about 92°C, and a hot tack seal initiation temperature at 1 N of less than or equal to about 92°C.

Also described in the examples are polyethylene blends having a density between about 0.918 g/cm$^3$ and about 0.922 g/cm$^3$ and an MI (I$_2$) between about 0.90 g/10 min and about 1.10 g/10 min. As described, each polyethylene blend comprises two polyethylene compositions. Each of the polyethylene compositions used to make the polyethylene blend can have a density between about 0.890 g/cm$^3$ and about 0.960 g/cm$^3$ and an MI (I$_2$) between about 0.1 g/10 min and about 15.0 g/10 min. However, for each polyethylene blend, the density of each of the polyethylene compositions is different from the density of the other polyethylene composition in an amount of between about 0.050 and 0.060, preferably about 0.055 g/cm$^3$.

The polyethylene blend can have a melt index ratio ("MIR") between about 15 and about 25. The polyethylene blend can also have an $M_w/M_n$ between about 2.5 and about 4.0. Moreover, the polyethylene blend can have an $M_z/M_w$ between about 1.8 and about 3.0.

As provided in the examples, each of the polyethylene compositions can have an $M_w/M_n$ between about 2.4 and about 3.4 and an $M_z/M_w$ between about 1.7 and about 2.3.

**Polyethylene Compositions**

As described herein, the present polyethylene compositions comprise from about 50.0 mol% to about 100.0 mol% of units derived from ethylene. The lower limit on the range of ethylene content can be from 50.0 mol%, 75.0 mol%, 80.0 mol%, 85.0 mol%, 90.0 mol%, 92.0 mol%, 94.0 mol%, 95.0 mol%, 96.0 mol%, 97.0 mol%, 98.0 mol%, or 99.0 mol% based on the mol% of polymer units derived from ethylene. The polyethylene composition can have an upper limit on the range of ethylene content of 80.0 mol%, 85.0 mol%, 90.0 mol%, 92.0 mol%, 94.0 mol%, 95.0 mol%, 96.0 mol%, 97.0 mol%, 98.0 mol%, 99.0 mol%, 99.5 mol%, or 100.0 mol%, based on mole % of polymer units derived from ethylene.

Further provided herein are polyethylene compositions produced by polymerization of ethylene and, optionally, an alpha-olefin comonomer having from 3 to 10 carbon atoms. Alpha-olefin comonomers are selected from monomers having 3 to 10 carbon atoms, such as $C_3$-$C_{10}$ alpha-olefins. Alpha-olefin comonomers can be linear or branched or may include two unsaturated carbon-carbon bonds, i.e., dienes. Examples of suitable comonomers include linear $C_3$-$C_{10}$ alpha-olefins and alpha-olefins having one or more $C_1$-$C_3$ alkyl branches or an aryl group. Comonomer examples include propylene, 1-butene, 3-methyl-1-butene, 3,3-dimethyl-1-butene, 1-pentene, 1-pentene with one or more methyl, ethyl, or propyl substituents, 1-hexene, 1-hexene with one or more methyl, ethyl, or propyl substituents, 1-heptene, 1-heptene with one or more methyl, ethyl, or propyl substituents, 1-octene, 1-octene with one or more methyl, ethyl, or propyl substituents, 1-nonene, 1-nonene with one or more methyl, ethyl, or propyl substituents, ethyl, methyl, or dimethyl-substituted 1-decene, 1-dodecene, and styrene.

Exemplary combinations of ethylene and comonomers include: ethylene 1-butene, ethylene 1-pentene, ethylene 4-methyl-1-pentene, ethylene 1-hexene, ethylene 1-octene, ethylene decene, ethylene dodecene, ethylene 1-butene 1-hexene, ethylene 1-butene 1-pentene, ethylene 1-butene 4-methyl-1-pentene, ethylene 1-butene 1-octene, ethylene 1-hexene 1-pentene, ethylene 1-hexene 4-methyl-1-pentene, ethylene 1-hexene 1-octene, ethylene 1-hexene decene, ethylene 1-hexene dodecene, ethylene propylene 1-octene, ethylene 1-octene 1-butene, ethylene 1-octene 1-pentene, ethylene 1-octene 4-methyl-1-pentene, ethylene 1-octene 1-hexene, ethylene 1-octene decene, ethylene 1-octene dodecene, and combinations thereof. It should be appreciated that the foregoing list of comonomers and comonomer combinations are merely exemplary and are not intended to be limiting. Often, the comonomer is 1-butene, 1-hexene, or 1-octene.

During copolymerization, monomer feeds are regulated to provide a ratio of ethylene to comonomer, e.g., alpha-olefin, so as to yield a polyethylene having a comonomer content, as a bulk measurement, of from about 0.1 mol% to about 20 mol% comonomer. In other aspects the comonomer content is from about 0.1 mol% to about 4.0 mol%, or from about 0.1 mol% to about 3.0 mol%, or from about 0.1 mol% to about 2.0 mol%, or from about 0.5 mol% to about 5.0 mol%, or from about 1.0 mol% to about 5.0 mol%. The reaction temperature, monomer residence time, catalyst system component quantities, and molecular weight control agent (such as $H_2$) may be regulated so as to provide the polyethylene compositions. For linear polyethylenes, the amount of comonomers, comonomer distribution along the polymer backbone, and comonomer branch length will generally delineate the density range.

Comonomer content is based on the total content of all monomers in the polymer. The polyethylene copolymer has minimal long chain branching (i.e., less than 1.0 long-chain branch/1000 carbon atoms, particularly 0.05 to 0.50 long-chain branch/1000 carbon atoms). Such values are characteristic of a linear structure that is consistent with a branching index (as defined below) of $g'_{vis} \geq 0.980$, $0.985$, $\geq 0.99$, $\geq 0.995$, or $1.0$. While such values are indicative of little to no long chain branching, some long chain branches can be present (i.e., less than 1.0 long-chain branch/1000 carbon atoms, or less than 0.5 long-chain branch/1000 carbon atoms, particularly 0.05 to 0.50 long-chain branch/1000 carbon atoms).

In an aspect, the present polyethylene compositions can include ethylene-based polymers which include LLDPE produced by gas-phase polymerization of ethylene and, optionally, an alpha-olefin with a catalyst having as a transition metal component a bis(n-$C_{3-4}$ alkyl cyclopentadienyl) hafnium compound, wherein the transition metal component comprises from about 95 to about 99 mol% of the hafnium compound.

Generally, polyethylene can be polymerized in any catalytic polymerization process, including solution phase processes, gas phase processes, slurry phase processes, and combinations of such processes. An exemplary process used to polymerize ethylene-based polymers, such as LLDPEs, is as described in U.S. Pat. Nos. 6,936,675 and 6,528,597.

The above-described processes can be tailored to achieve desired polyethylene compositions. For example, comonomer to ethylene concentration or flow rate ratios are commonly used to control composition density. Similarly, hydrogen to ethylene concentrations or flow rate ratios are commonly used to control composition molecular weight.

9

Polyethylene compositions provided herein can be blended with LLDPE and other polymers, such as additional polymers prepared from ethylene monomers. Exemplary additional polymers are LLDPE, non-linear LDPE, very low density polyethylene ("VLDPE"), MDPE, high density polyethylene ("HDPE"), differentiated polyethylene ("DPE"), and combinations thereof. DPE copolymers include EVA, EEA, EMA, EBA, and other specialty copolymers. The additional polymers contemplated in certain aspects include ethylene homopolymers and/or ethylene-olefin copolymers. The product of blending one or more polyethylene compositions with other polymers is referred to as a polyethylene blend.

Polyethylene compositions can be composed of blended polymers include at least 0.1 wt% and up to 99.9 wt% of the LLDPE, and at least 0.1 wt% and up to 99.9 wt% of one or more additional polymers, with these wt% based on the total weight of the polyethylene composition. Alternative lower limits of the LLDPE can be 5%, 10%, 20%, 30%, 40%, or 50% by weight. Alternative upper limits of the LLDPE can be 95%, 90%, 80%, 70%, 60%, and 50% by weight. Ranges from any lower limit to any upper limit are within the scope of the invention. Preferred blends include more than about 90% LLDPE, and preferably more than about 95% LLDPE. In an aspect, the blends include from 5-85%, alternatively from 10-50% or from 10-30% by weight of the LLDPE. The balance of the weight percentage is the weight of the additional and/or other type of polymers, e.g., different LLDPE, LDPE, VLDPE, MDPE, HDPE, DPE such as EVA, EEA, EMA, EBA, and combinations thereof.

The polyethylene compositions can have a density greater than or equal to ("$\geq$") about 0.895 g/cm$^3$, $\geq$ about 0.896 g/cm$^3$, $\geq$ about 0.897 g/cm$^3$, $\geq$ about 0.898 g/cm$^3$, $\geq$ about 0.899 g/cm$^3$, $\geq$ about 0.900 g/cm$^3$, $\geq$ about 0.910 g/cm$^3$, $\geq$ about 0.920 g/cm$^3$, 0.930 g/cm$^3$, $\geq$ about 0.935 g/cm$^3$, $\geq$ about 0.940 g/cm$^3$, $\geq$ about 0.945 g/cm$^3$, $\geq$ about 0.950 g/cm$^3$, $\geq$ about 0.955 g/cm$^3$, and $\geq$ about 0.960 g/cm$^3$. Alternatively, polyethylene compositions can have a density less than or equal to ("$\leq$") about 0.960 g/cm$^3$ about 0.950 g/cm$^3$, e.g., $\leq$ about 0.940 g/cm$^3$, $\leq$ about 0.930 g/cm$^3$, $\leq$ about 0.920 g/cm$^3$, $\leq$ about 0.910 g/cm$^3$, $\leq$ about 0.900 g/cm$^3$ and $\leq$ about 0.890 g/cm$^3$. These ranges include, but are not limited to, ranges formed by combinations any of the above-enumerated values, e.g., from about 0.895 to about 0.960 g/cm$^3$, about 0.900 to about 0.950 g/cm$^3$, about 0.910 about to 0.940 g/cm$^3$, about 0.935 to about 0.950 g/cm$^3$, etc. Density is determined using chips cut from plaques compression molded in accordance with ASTM D-1928-C, aged in accordance with ASTM D-618 Procedure A, and measured as specified by ASTM D-1505.

The polyethylene compositions have an MI according to ASTM D-1238-E (190°C/2.16 kg) reported in grams per 10 minutes (g/10 min), of $\geq$ about 0.10 g/10 min, e.g., $\geq$ about 0.15 g/10 min, $\geq$ about 0.18 g/10 min, $\geq$ about 0.20 g/10 min, $\geq$ about 0.22 g/10 min, $\geq$ about 0.25 g/10 min, $\geq$ about 0.28 g/10 min, or $\geq$ about 0.30 g/10 min.

Also, the polyethylene compositions can have an MI ($I_{2.16}$) $\leq$ about 3.0 g/10 min, $\leq$ about 2.0 g/10 min, $\leq$ about 1.5 g/10 min, $\leq$ about 1.0 g/10 min, $\leq$ about 0.75 g/10 min, $\leq$ about 0.50 g/10 min, $\leq$ about 0.40 g/10 min, $\leq$ about 0.30 g/10 min, $\leq$ about 0.25 g/10 min, $\leq$ about 0.22 g/10 min, $\leq$ about 0.20 g/10 min, $\leq$ about 0.18 g/10 min, or $\leq$ about 0.15 g/10 min. The ranges, however, include, but are not limited to, ranges formed by combinations any of the above-enumerated values, for example: from about 0.1 to about 5.0; about 0.2 to about 2.0; and about 0.2 to about 0.5 g/10 min.

The polyethylene compositions can have a melt index ratio ("MIR") that is a dimensionless number and is the ratio of the high load MI to the MI, or $I_{21.6}/I_{2.16}$, as described above. The MIR of the polyethylene compositions described herein is from about 25 to about 80, alternatively, from about 25 to about 70, alternatively, from about 30 to about 55, and alternatively, from about 35 to about 50.

The polyethylene compositions can have an orthogonal comonomer distribution. The term "orthogonal comonomer distribution" is used herein to mean across the molecular weight range of the ethylene polymer, comonomer contents for the various polymer fractions are not substantially uniform and a higher molecular weight fraction thereof generally has a higher comonomer content than that of a lower molecular weight fraction. Both a substantially uniform and an orthogonal comonomer distribution may be determined using fractionation techniques such as gel permeation chromatography-differential viscometry ("GPC-DV"), temperature rising elution fraction-differential viscometry ("TREF-DV") or cross-fractionation techniques.

In an aspect, the polyethylene composition can have at least a first peak and a second peak in a comonomer distribution analysis, wherein the first peak has a maximum at a log($M_w$) value of 4.0 to 5.4, 4.3 to 5.0, or 4.5 to 4.7; and a TREF elution temperature of 70.0°C to 100.0°C, 80.0°C to 95.0°C, or 85.0°C to 90.0°C. The second peak in the comonomer distribution analysis has a maximum at a log($M_w$) value of 5.0 to 6.0, 5.3 to 5.7, or 5.4 to 5.6; and a TREF elution temperature of 5.0°C to 60.0°C or 10.0°C to 60.0°C. A description of the TREF methodology is described in US 8,431,661 B2 and US 6,248,845 B1.

The present polyethylene compositions typically have a broad composition distribution as measured by CDBI or solubility distribution breadth index ("SDBI"). For details of determining the CDBI or SDBI of a copolymer, see, for example, PCT Patent Application WO 93/03093, published Feb. 18, 1993. Polymers produced using a catalyst system described herein have a CDBI less than 50%, or less than 40%, or less than 30%. In an aspect, the polymers have a CDBI of from 20% to less than 50%. In an aspect, the polymers have a CDBI of from 20% to 35%. In an aspect, the polymers have a CDBI of from 25% to 28%.

Polyethylene composition are produced using a catalyst system described herein and have a SDBI greater than 15°C, or greater than 16°C, or greater than 17°C, or greater than 18°C, or greater than 20°C. In an aspect, the polymers have a SDBI of from 18°C to 22°C. In an aspect, the polymers have a SDBI of from 18.7°C to 21.4°C. In an aspect, the polymers have a SDBI of from 20°C to 22°C.

Certain of the present polyethylene compositions are sold under the EXCEED XP® trademark, including metallocene polyethylene compositions ("EXCEED XP® mPE"), which are available from ExxonMobil Chemical Company. EXCEED XP™ mPE compositions offer step-out performance with respect to, for example, dart drop impact strength, flex-crack resistance, and machine direction (MD) tear, as well as maintaining stiffness at lower densities. EXCEED XP™ mPE compositions also offer optimized solutions for a good balance of melt strength, toughness, stiffness, and sealing capabilities which makes this family of polymers well-suited for blown film/sheet solutions.

For example, EXCEED™ 1018 polyethylene composition comprises ethylene 1-hexene copolymers and has a density of about 0.918 g/cm$^3$ and an MI (I$_2$) of about 1.0 g/10 min.

Catalysts - Conventional

Conventional catalysts refer to Ziegler Natta catalysts or Phillips-type chromium catalysts. Examples of conventional-type transition metal catalysts are discussed in U.S. Patent Nos. 4,115,639, 4,077,904 4,482,687, 4,564,605, 4,721,763, 4,879,359 and 4,960,741. The conventional catalyst compounds that may be used in the processes disclosed herein include transition metal compounds from Groups 3 to 10, or Groups 4 to 6 of the Periodic Table of Elements.

These conventional-type transition metal catalysts may be represented by the formula:

MRx ,

where M is a metal from Groups 3 to 10, or Group 4, or titanium; R is a halogen or a hydrocarbyloxy group; and x is the valence of the metal M. In an aspect, x is 1, 2, 3 or 4, or x is 4. Non-limiting examples of R include alkoxy, phenoxy, bromide, chloride and fluoride. Non-limiting examples of conventional-type transition metal catalysts where M is titanium include TiCl3, TiCl4, TiBr4, Ti(OC2H5)3Cl, Ti(OC2H5)Cl3, Ti(OC4H9)3Cl, Ti(OC3H7)2Cl2, Ti(OC2H5)2Br2, TiCl3.1/3AlCl3 and Ti(OC12H25)Cl3. Conventional chrome catalysts, often referred to as Phillips-type catalysts, may include CrO3, chromocene, silyl chromate, chromyl chloride (CrO2Cl2), chromium-2-ethyl-hexanoate, chromium acetylacetonate (Cr(AcAc)3). Non-limiting examples are disclosed in U.S. Patent Nos. 2,285,721, 3,242,099 and 3,231,550. For optimization, many conventional-type catalysts require at least one cocatalyst. A detailed discussion of cocatalyst may be found in U.S. Patent No. 7,858,719, Col. 6, line 46, to Col. 7, line 45.

Catalysts - Metallocene

Metallocene catalysts (also referred to herein sometimes as metallocenes or metallocene compounds) are generally described as containing one or more ligand(s) and one or more leaving group(s) bonded to at least one metal atom, optionally with at least one bridging group. The ligands are generally represented by one or more open, acyclic, or fused ring(s) or ring system(s) or a combination thereof. These ligands, the ring(s) or ring system(s), can comprise one or more atoms selected from Groups 13 to 16 atoms of the Periodic Table of Elements; in an aspect, the atoms are selected from the group consisting of carbon, nitrogen, oxygen, silicon, sulfur, phosphorous, germanium, boron and aluminum or a combination thereof. Further, the ring(s) or ring system(s) comprise carbon atoms such as, but not limited to, those cyclopentadienyl ligands or cyclopentadienyl-type ligand structures or other similar functioning ligand structures such as a pentadiene, a cyclooctatetraendiyl, or an imide ligand. The metal atom can be selected from Groups 3 through 15 and the lanthanide or actinide series of the Periodic Table of Elements. The metal is a transition metal from Groups 4 through 12, Groups 4, 5 and 6, and the transition metal is from Group 4.

Exemplary metallocene catalysts and catalyst systems are described in, for example, U.S. Patent Nos. 4,530,914, 4,871,705, 4,937,299, 5,017,714, 5,055,438, 5,096,867, 5,120,867, 5,124,418, 5,198,401, 5,210,352, 5,229,478, 5,264,405, 5,278,264, 5,278,119, 5,304,614, 5,324,800, 5,347,025, 5,350,723, 5,384,299, 5,391,790, 5,391,789, 5,399,636, 5,408,017, 5,491,207, 5,455,366, 5,534,473, 5,539,124, 5,554,775, 5,621,126, 5,684,098, 5,693,730, 5,698,634, 5,710,297, 5,712,354, 5,714,427, 5,714,555, 5,728,641, 5,728,839, 5,753,577, 5,767,209, 5,770,753, 5,770,664; EP-A-0 591 756, EP-A-0 520-732, EP-A-0 420 436, EP-B1 0 485 822, EP-B1 0 485 823, EP-A2-0 743 324, EP-B1 0 518 092; WO 91/04257, WO 92/00333, WO 93/08221, WO 93/08199, WO 94/01471, WO 96/20233, WO 97/15582, WO 97/19959, WO 97/46567, WO 98/01455, WO 98/06759, and WO 98/011144.

**Polymerization** Processes

The catalysts described above are suitable for use in any olefin pre-polymerization or polymerization process or both. Suitable polymerization processes include solution, gas phase, slurry phase, and a high-pressure process, or any combination thereof. A desirable process is a gas phase polymerization of one or more olefin monomers having from 2 to 30 carbon atoms, from 2 to 12 carbon atoms in an aspect, and from 2 to 8 carbon atoms in an aspect. Other monomers useful in the process include ethylenically unsaturated monomers, diolefins having 4 to 18 carbon atoms, conjugated or nonconjugated dienes, polyenes, vinyl monomers and cyclic olefins. Non-limiting monomers may also include norbornene, norbornadiene, isobutylene, isoprene, vinylbenzocyclobutane, styrenes, alkyl substituted styrene, ethylidene norbornene, dicyclopentadiene and cyclopentene.

In an aspect, a copolymer of ethylene derived units and one or more monomers or comonomers is produced. The one or more comonomers are an $\alpha$-olefin having from 4 to 15 carbon atoms in an aspect, from 4 to 12 carbon atoms in an aspect, and from 4 to 8 carbon atoms in an aspect. The comonomer can be 1-hexene.

Hydrogen gas is often used in olefin polymerization to control the final properties of the polyolefin, such as described in Polypropylene Handbook 76-78 (Hanser Publishers, 1996). Increasing concentrations (partial pressures) of hydrogen increase the melt flow rate (MFR) and/or MI of the polyolefin generated. The MFR or MI can thus be influenced by the hydrogen concentration. The amount of hydrogen in the polymerization can be expressed as a mole ratio relative to the total polymerizable monomer, for example, ethylene, or a blend of ethylene and hexane or propene. The amount of hydrogen used in the polymerization process is an amount necessary to achieve the desired MFR or MI of the final polyolefin composition. The mole ratio of hydrogen to total monomer ($H_2$:monomer) is in a range of from greater than 0.0001 in an aspect, from greater than 0.0005 in an aspect, from greater than 0.001 in an aspect, to less than 10 in an aspect, less than 5 in an aspect, less than 3 in an aspect, and less than 0.10 in an aspect, wherein a desirable range may comprise any combination of any upper mole ratio limit with any lower mole ratio limit described herein. Expressed another way, the amount of hydrogen in the reactor at any time may range to up to 5000 ppm, up to 4000 ppm in an aspect, up to 3000 ppm in an aspect, between 50 ppm and 5000 ppm in an aspect, and between 100 ppm and 2000 ppm in an aspect.

In a gas phase polymerization process, a continuous cycle is often employed where one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer.

The ethylene partial pressure can vary between 80 and 300 psia, or between 100 and 280 psia, or between 120 and 260 psia, or between 140 and 240 psia. More importantly, a ratio of comonomer to ethylene in the gas phase can vary from 0.0 to 0.10, or between 0.005 and 0.05, or between 0.007 and 0.030, or between 0.01 and 0.02.

Reactor pressure typically varies from 100 psig (690 kPa) to 500 psig (3448 kPa). In an aspect, the reactor pressure is maintained within the range of from 200 psig (1379 kPa) to 500 psig (3448 kPa). In an aspect, the reactor pressure is maintained within the range of from 250 psig (1724 kPa) to 400 psig (2759 kPa).

**Production of Blown Film**

Blown film extrusion involves the process of extruding the polyethylene blend (also referred to sometimes as a resin) through a die (not shown) followed by a bubble-like expansion. Advantages of manufacturing film in this manner include: (1) a single operation to produce tubing; (2) regulation of film width and thickness by control of the volume of air in the bubble; (3) high extruder output and haul-off speed; (4) elimination of end effects such as edge bead trim and nonuniform temperature that can result from flat die film extrusion; and (5) capability of biaxial orientation (allowing uniformity of mechanical properties).

As part of the process, a melt comprising the polyethylene blend is mixed with a foaming agent and extruded through an annular slit die (not shown) to form a thin walled tube. Air is introduced via a hole in the center of the die to blow up the tube like a balloon. Mounted on top of the die, a high-speed air ring (not shown) blows onto the hot film to cool it. The foam film is drawn in an upward direction, continually cooling, until it passes through nip rolls (not shown) where the tube is flattened to create what is known as a 'lay-flat' tube of film. This lay-flat or collapsed tube is then taken back down the extrusion tower (not shown) via more rollers. For high output lines, air inside the bubble may also be exchanged. The lay-flat film is either wound or the edges of the film are slit off to produce two flat film sheets and wound up onto reels to produce a tube of film. For lay-flat film, the tube can be made into bags, for example, by sealing across the width of film and cutting or perforating to make each bag. This operation can be performed either in line with the blown film process or at a later time. The blown film extrusion process is typically a continuous process.

**EXAMPLE I**

In this example, polyethylene blends were produced by blending two polyethylene compositions. Each polyethylene blend comprised one polyethylene composition with lower density and one polyethylene composition with higher density. The polyethylene compositions were blended in amounts so that each polyethylene blend had a density of approximately 0.920 g/cm³. Additionally, each polyethylene blend has an MI of approximately 1.0 g/10 min.

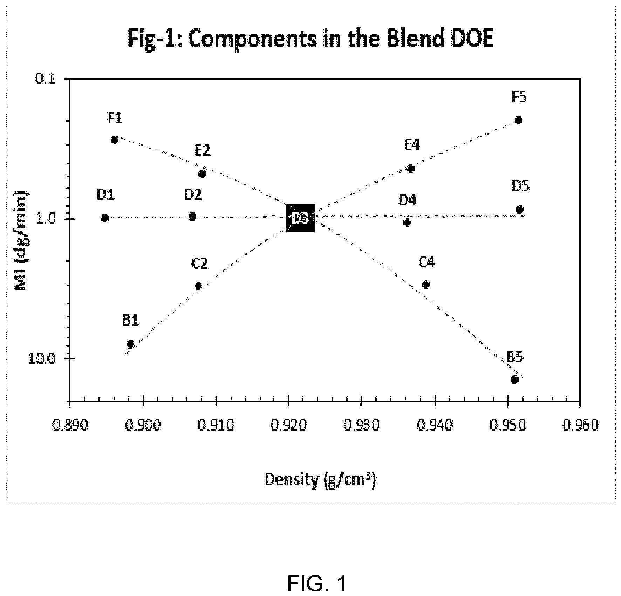

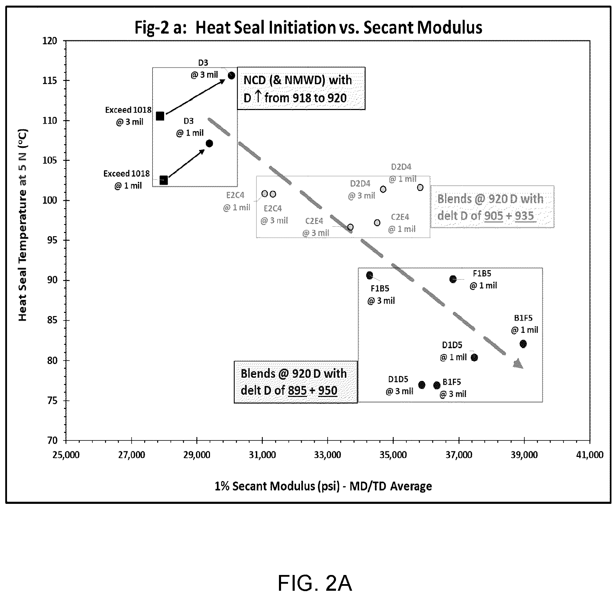

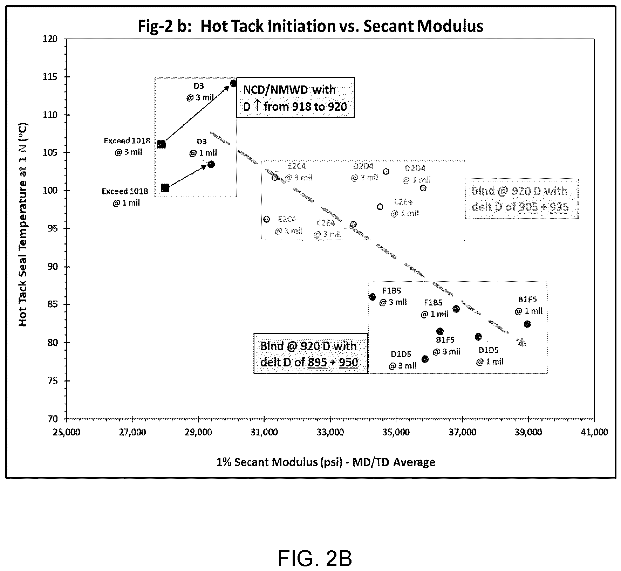

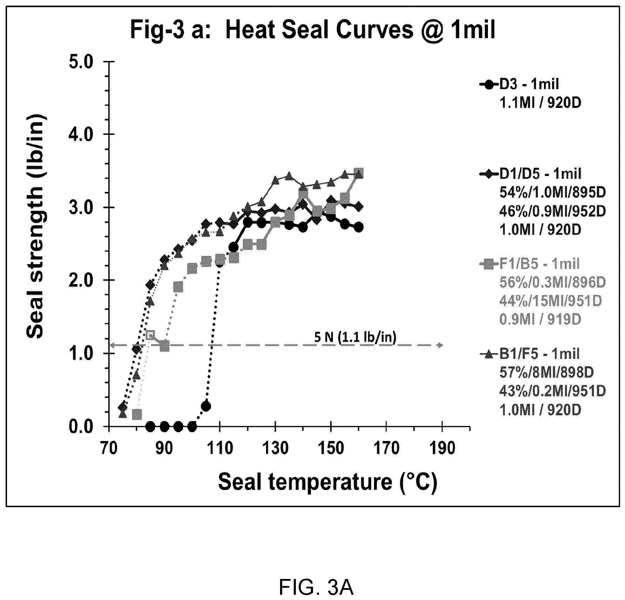

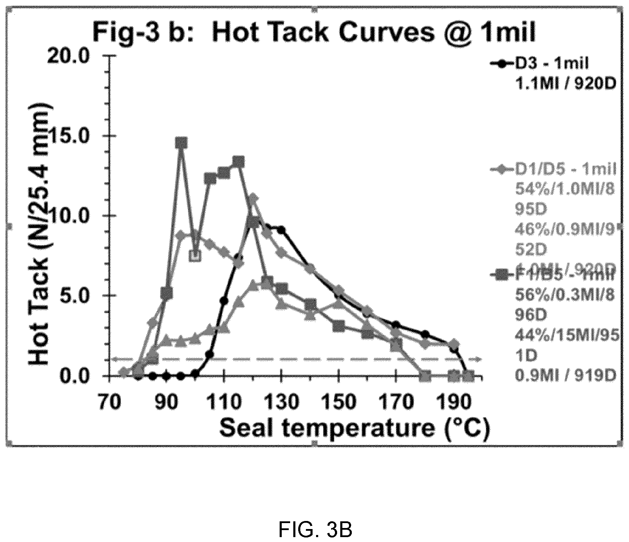

FIG. 1 shows the reactor grades (all with NMWD/NCD characteristics) were made and used as blending components (polyethylene compositions). FIG. 2 shows the unexpected stiffness and sealing tend against conventional wisdom of NMWD/NCD controls. FIG. 3 provides a description and characterization for the components. Tables 1A through 1G provided immediately below set out the detailed descriptions and characterizations of the polyethylene compositions used to produce the polyethylene blends. Likewise, Tables 2A through 2G provide detailed descriptions and characterization results for the polyethylene blends.

Table 1A

| Characterization of NMWD/NCD Components and Control in Blend DOE | | | |
|---|---|---|---|
| Components | | F1 | E2 |
| | | Components for BOCD | |
| Catalyst | | OMC-1716 | OMC-1716 |
| MI | (dg/min) | 0.28 | 0.48 |
| HLMI | (dg/min) | 4.56 | 7.74 |
| MIR | ($I_{21}/I_2$) | 16.3 | 16.1 |
| Density | (g/cm³) | 0.8961 | 0.9082 |
| H-NMR File # | | hctl20160904412 | hct120160904410 |
| Vinylene | (/1000C) | 0.02 | 0.01 |
| TSO | (/1000C) | 0.03 | 0.02 |
| Vinylene | (/1000C) | 0.01 | 0.01 |
| Vinylidene | (/1000C) | 0.01 | 0.01 |
| Total Unsat | (/1000C) | 0.07 | 0.05 |
| methyl w/o CE Correction | (/1000C) | 29.0 | 19.8 |
| GPC-4D File # | | 116-2655 | 116-2491 |
| Mn GPC4D | (g/mol) | 67,414 | 52,319 |
| Mw GPC4D | (g/mol) | 166,205 | 140,928 |
| Mz GPC4D | (g/mol) | 283,446 | 245,047 |
| Mz+1 | (g/mol) | 426,847 | 367,377 |
| Mw/Mn GPC4D | | 2.5 | 2.7 |
| Mz/Mw GPC4D | | 1.7 | 1.7 |
| Bulk C6 | (wt %) | 17.3 | 11.9 |
| g'(Vis Ave.) | | 1.00 | 1.01 |
| Recover | (%) | 103% | 104% |
| Cryo-TREFIR5 Run # | | 16-1125 | 16-1123 |
| SF Weight Fraction | (%) | 0.58 | 0.42 |
| Tw TREF | (°C) | 58.58 | 70.42 |
| Tn TREF | (°C) | 54.13 | 49.73 |
| T75-T25 | (°C) | 9.2 | 10.1 |

Table 1B

| Characterization of NMWD/NCD Components and Control in Blend DOE | | | |
|---|---|---|---|
| Components | | C4 | B5 |
| | | Components for BOCD | |
| Catalyst | | EXP 1201 | OMC-1716 |
| MI | (dg/min) | 3.0 | 14.2 |
| HLMI | (dg/min) | 51 | 241 |
| MIR | ($I_{21}/I_2$) | 17.0 | 17.0 |
| Density | (g/cm$^3$) | 0.9389 | 0.9510 |
| H-NMR File # | | hctl20160904044 | hctl20160904042 |
| Vinylene | (/1000C) | 0.07 | 0.01 |
| TSO | (/1000C) | 0.08 | 0.01 |
| Vinylene | (/1000C) | 0.01 | 0.01 |
| Vinylidene | (/1000C) | 0.01 | 0.00 |
| Total Unsat | (/1000C) | 0.17 | 0.03 |
| methyl w/o CE Correction | (/1000C) | 4.4 | 3.4 |
| GPC-4D File # | | 116-2485 | 116-2651 |
| Mn GPC4D | (g/mol) | 31,208 | 17,408 |
| Mw GPC4D | (g/mol) | 86,944 | 55,977 |
| Mz GPC4D | (g/mol) | 168,938 | 105,252 |
| Mz+1 | (g/mol) | 289,573 | 164,332 |
| Mw/Mn GPC4D | | 2.8 | 3.2 |
| Mz/Mw GPC4D | | 1.9 | 1.9 |
| Bulk C6 | (wt %) | 2.5 | 1.5 |
| g'(Vis Ave.) | | 1.00 | 1.03 |
| Recover | (%) | 100% | 100% |
| Cryo-TREFIR5 Run # | | 16-1117 | 16-1115 |
| SF Weight Fraction | (%) | 0.26 | 0.39 |
| Tw TREF | (°C) | 91.39 | 92.44 |
| Tn TREF | (°C) | 86.56 | 88.85 |
| T75-T25 | (°C) | 2.1 | 1.6 |

Table 1C

| Characterization of NMWD/NCD Components and Control in Blend DOE | | | |
|---|---|---|---|
| Components | | D1 | D2 |
| | | Components for NMWD/BCD | |
| Catalyst | | OMC-1716 | OMC-1716 |
| MI | (dg/min) | 0.99 | 0.98 |
| HLMI | (dg/min) | 16.1 | 16.0 |
| MIR | ($I_{21}/I_2$) | 16.3 | 16.3 |
| Density | (g/cm$^3$) | 0.8949 | 0.9069 |

(continued)

| Characterization of NMWD/NCD Components and Control in Blend DOE | | | |
|---|---|---|---|
| Components | | D1 | D2 |
| | | Components for NMWD/BCD | |
| Catalyst | | OMC-1716 | OMC-1716 |
| H-NMR File # | | hct120160904045 | hctl20160904046 |
| Vinylene | (/1000C) | 0.01 | 0.01 |
| TSO | (/1000C) | 0.01 | 0.01 |
| Vinylene | (/1000C) | 0.01 | 0.01 |
| Vinylidene | (/1000C) | 0.01 | 0.01 |
| Total Unsat | (/1000C) | 0.04 | 0.04 |
| methyl w/o CE Correction | (/1000C) | 31.2 | 22.5 |
| GPC-4D File # | | I16-2652 | I16-2487 |
| Mn GPC4D | (g/mol) | 46,263 | 44,876 |
| Mw GPC4D | (g/mol) | 119,352 | 115,864 |
| Mz GPC4D | (g/mol) | 201,808 | 199,408 |
| Mz+1 | (g/mol) | 298,058 | 296,455 |
| Mw/Mn GPC4D | | 2.6 | 2.6 |
| Mz/Mw GPC4D | | 1.7 | 1.7 |
| Bulk C6 | (wt %) | 18.7 | 13.1 |
| g'(Vis Ave.) | | 0.98 | 1.01 |
| Recover | (%) | 101% | 100% |
| Cryo-TREFIR5 Run # | | 16-1118 | 16-1119 |
| SF Weight Fraction | (%) | 1.06 | 0.48 |
| Tw TREF | (°C) | 54.36 | 66.33 |
| Tn TREF | (°C) | 49.3 | 61.74 |
| T75-T25 | (°C) | 10.8 | 10.3 |

Table 1D

| Characterization of NMWD/NCD Components and Control in Blend DOE | | | |
|---|---|---|---|
| Components | | D4 | D5 |
| | | Components for NMWD/BCD | |
| Catalyst | | EXP 1201 | EXP 1201 |
| MI | (dg/min) | 1.07 | 0.86 |
| HLMI | (dg/min) | 18.2 | 14.6 |
| MIR | ($I_{21}/I_2$) | 17.0 | 17.0 |
| Density | (g/cm$^3$) | 0.9363 | 0.9518 |
| H-NMR File # | | hctl20160904048 | hctl20160904049 |
| Vinylene | (/1000C) | 0.09 | 0.06 |
| TSO | (/1000C) | 0.07 | 0.01 |
| Vinylene | (/1000C) | 0.01 | 0.01 |

(continued)

| Characterization of NMWD/NCD Components and Control in Blend DOE | | | |
|---|---|---|---|
| Components | | D4 | D5 |
| | | Components for NMWD/BCD | |
| Catalyst | | EXP 1201 | EXP 1201 |
| Vinylidene | (/1000C) | 0.00 | 0.00 |
| Total Unsat | (/1000C) | 0.17 | 0.08 |
| methyl w/o CE Correction | (/1000C) | 3.7 | 1.2 |
| GPC-4D File # | | I16-2653 | I16-2454 |
| Mn GPC4D | (g/mol) | 41,485 | 40,424 |
| Mw GPC4D | (g/mol) | 115,349 | 124,722 |
| Mz GPC4D | (g/mol) | 224,568 | 259,215 |
| Mz+1 | (g/mol) | 392,968 | 477,363 |
| Mw/Mn GPC4D | | 2.8 | 3.1 |
| Mz/Mw GPC4D | | 1.9 | 2.1 |
| Bulk C6 | (wt %) | 2.1 | 0.7 |
| g'(Vis Ave.) | | 1.00 | 1.05 |
| Recover | (%) | 100% | 100% |
| Cryo-TREFIR5 Run # | | 16-1121 | 16-1122 |
| SF Weight Fraction | (%) | 0.23 | 0.21 |
| Tw TREF | (°C) | 92.64 | 96.62 |
| Tn TREF | (°C) | 88.65 | 92.15 |
| T75-T25 | (°C) | 1.6 | 1.1 |

Table 1E

| Characterization of NMWD/NCD Components and Control in Blend DOE | | | |
|---|---|---|---|
| Components | | B1 | C2 |
| | | Components for Conv. CD | |
| Catalyst | | OMC-1716 | OMC-1716 |
| MI | (dg/min) | 7.8 | 3.1 |
| HLMI | (dg/min) | 135 | 49 |
| MIR | ($I_{21}/I_2$) | 17.3 | 16.0 |
| Density | (g/cm$^3$) | 0.8983 | 0.9078 |
| H-NMR File # | | hctl20160904041 | hctl20160904043 |
| Vinylene | (/1000C) | 0.02 | 0.07 |
| TSO | (/1000C) | 0.04 | 0.14 |
| Vinylene | (/1000C) | 0.00 | 0.03 |
| Vinylidene | (/1000C) | 0.00 | 0.00 |
| Total Unsat | (/1000C) | 0.06 | 0.24 |
| methyl w/o CE Correction | (/1000C) | 31.5 | 22.7 |
| GPC-4D File # | | I16-2482 | I16-2484 |

(continued)

| Characterization of NMWD/NCD Components and Control in Blend DOE | | | |
|---|---|---|---|
| Components | | B1 | C2 |
| | | Components for Conv. CD | |
| Catalyst | | OMC-1716 | OMC-1716 |
| Mn GPC4D | (g/mol) | 27,956 | 32,985 |
| Mw GPC4D | (g/mol) | 67,905 | 85,606 |
| Mz GPC4D | (g/mol) | 112,947 | 146,301 |
| Mz+1 | (g/mol) | 166,117 | 217,119 |
| Mw/Mn GPC4D | | 2.4 | 2.6 |
| Mz/Mw GPC4D | | 1.7 | 1.7 |
| Bulk C6 | (wt %) | 19.3 | 13.5 |
| g'(Vis Ave.) | | 0.98 | 1.01 |
| Recover | (%) | 104% | 100% |
| Cryo-TREFIR5 Run # | | 16-1114 | 16-1116 |
| SF Weight Fraction | (%) | 1.52 | 0.65 |
| Tw TREF | (°C) | 51.95 | 64.85 |
| Tn TREF | (°C) | 47.41 | 60.04 |
| T75-T25 | (°C) | 13.0 | 11.5 |

Table 1F

| Characterization of NMWD/NCD Components and Control in Blend DOE | | | |
|---|---|---|---|
| Components | | E4 | F5 |
| | | Components for Conv. CD | |
| Catalyst | | EXP 1201 | EXP 1201 |
| MI | (dg/min) | 0.44 | 0.20 |
| HLMI | (dg/min) | 7.33 | 3.67 |
| MIR | $(I_{21}/I_2)$ | 16.7 | 18.4 |
| Density | (g/cm$^3$) | 0.9369 | 0.9516 |
| H-NMR File # | | hctl20160904011 | hctl20160904013 |
| Vinylene | (/1000C) | 0.11 | 0.06 |
| TSO | (/1000C) | 0.06 | 0.01 |
| Vinylene | (/1000C) | 0.00 | 0.00 |
| Vinylidene | (/1000C) | 0.01 | 0.00 |
| Total Unsat | (/1000C) | 0.18 | 0.07 |
| methyl w/o CE Correction | (/1000C) | 2.7 | 0.9 |
| GPC-4D File # | | I16-2492 | I16-2456 |
| Mn GPC4D | (g/mol) | 55,897 | 56,697 |
| Mw GPC4D | (g/mol) | 149,248 | 188,670 |
| Mz GPC4D | (g/mol) | 294,490 | 426,898 |
| Mz+1 | (g/mol) | 542,631 | 920,720 |

(continued)

| Characterization of NMWD/NCD Components and Control in Blend DOE | | | |
|---|---|---|---|
| Components | | E4 | F5 |
| | | Components for Conv. CD | |
| Catalyst | | EXP 1201 | EXP 1201 |
| Mw/Mn GPC4D | | 2.7 | 3.3 |
| Mz/Mw GPC4D | | 2.0 | 2.3 |
| Bulk C6 | (wt %) | 1.6 | 0.4 |
| g'(Vis Ave.) | | 1.03 | 1.02 |
| Recover | (%) | 99% | 101% |
| Cryo-TREFIR5 Run # | | 16-1124 | 16-1126 |
| SF Weight Fraction | (%) | 0.3 | 0.42 |
| Tw TREF | (°C) | 93.96 | 96.79 |
| Tn TREF | (°C) | 85.19 | 85.8 |
| T75-T25 | (°C) | 1.3 | 1.2 |

Table 1G

| Characterization of NMWD/NCD Components and Control in Blend DOE | | | |
|---|---|---|---|
| Components | | D3 | Exceed 1018 |
| | | NMWD/NCD as Control | |
| Catalyst | | OMC-1716 | *Commercial* |
| MI | (dg/min) | 1.08 | 0.99 |
| HLMI | (dg/min) | 17.4 | 15.1 |
| MIR | $(I_{21}/I_2)$ | 16.1 | 15.2 |
| Density | $(g/cm^3)$ | 0.9216 | 0.9187 |
| H-NMR File # | | hctl20160904047 | - |
| Vinylene | (/1000C) | 0.01 | 0.01 |
| TSO | (/1000C) | 0.02 | 0.05 |
| Vinylene | (/1000C) | 0.01 | 0.06 |
| Vinylidene | (/1000C) | 0.01 | 0.02 |
| Total Unsat | (/1000C) | 0.05 | 0.13 |
| methyl w/o CE Correction | (/1000C) | 10.4 | 11.7 |
| GPC-4D File # | | I16-2488 | 17-1057 |
| Mn GPC4D | (g/mol) | 39,572 | 42,694 |
| Mw GPC4D | (g/mol) | 113,015 | 115,629 |
| Mz GPC4D | (g/mol) | 200,955 | 207,754 |
| Mz+1 | (g/mol) | 304,113 | 321,990 |
| Mw/Mn GPC4D | | 2.9 | 2.7 |
| Mz/Mw GPC4D | | 1.8 | 1.8 |
| Bulk C6 | (wt %) | 6.0 | 6.3 |
| g'(Vis Ave.) | | 0.99 | - |

(continued)

| Characterization of NMWD/NCD Components and Control in Blend DOE | | | |
|---|---|---|---|
| Components | | D3 | Exceed 1018 |
| | | NMWD/NCD as Control | |
| Catalyst | | OMC-1716 | *Commercial* |
| Recover | (%) | 101% | 101% |
| Cryo-TREFIR5 Run # | | 16-1120 | 18-0093 |
| SF Weight Fraction | (%) | 0.26 | 0.23 |
| Tw TREF | (°C) | 82.88 | 81.98 |
| Tn TREF | (°C) | 67.3 | 79.96 |
| T75-T25 | (°C) | 6.6 | 9.7 |

Table 2A

| Blend Composition and Characterization for the DOE | | | |
|---|---|---|---|
| | | BOCD Blends | |
| | | F1B5 | E2B5 |
| Blend Composition | | 56% F1 | 71% E2 |
| | | 44% B5 | 29% B5 |
| MI | (dg/min) | 0.93 | 0.96 |
| HLMI | (dg/min) | 22.3 | 18.2 |
| MIR | $(I_{21}/I_2)$ | 24.0 | 19.0 |
| Density | $(g/cm^3)$ | 0.919 | 0.918 |
| H-NMR File # | | hctl201607225713 | hctl201607225714 |
| Vinylene | (/1000C) | 0.01 | 0.01 |
| TSO | (/1000C) | 0.02 | 0.01 |
| Vinylene | (/1000C) | 0.00 | 0.00 |
| Vinylidene | (/1000C) | 0.00 | 0.00 |
| Total Unsat | (/1000C) | 0.03 | 0.02 |
| methyl w/o CE Correction | (/1000C) | 18.1 | 15.2 |
| GPC-4D Run # | | 16-2468 | 16-2469 |
| Mn GPC4D | (g/mol) | 30,370 | 33,398 |
| Mw GPC4D | (g/mol) | 118,267 | 115,936 |
| Mz GPC4D | (g/mol) | 242,682 | 223,565 |
| Mz+1 GPC4D | (g/mol) | 385,413 | 348,192 |
| Mw/Mn GPC4D | | 3.9 | 3.5 |
| Mz/Mw GPC4D | | 2.1 | 1.9 |
| Bulk C6 | (wt %) | 10.5 | 8.5 |
| g'(Vis Ave.) | | 0.95 | 0.99 |
| Recover | (%) | 100% | 100% |
| Cryo-TREFIR5 Run # | | 16-1019 | 16-1020 |
| SF Weight Fraction | (%) | 0.62 | 0.43 |

(continued)

| Cryo-TREFIR5 Run # | | 16-1019 | 16-1020 |
|---|---|---|---|
| Tw | (°C) | 73.2 | 76.94 |
| Tn | (°C) | 64.36 | 71.22 |
| T75-T25 | (°C) | 37 | 24 |
| Pk1 - Tmp | (°C) | 59.0 | 71.8 |
| Pk1 - Area | (%) | 57.8 | 66.9 |
| Pk2 - Tmp | (°C) | 94.3 | 93.9 |
| Pk2 - Area (LD component) | (%) | 41.5 | 32.7 |
| CFC File # | | 202-16CFC | 204-16CFC |
| 1st Half from CFC | (%) | 56.7% | 74.0% |
| 2nd Half from CFC | (%) | 43.3% | 26.0% |
| Mw1 | | 215,714 | 174,915 |
| Mw-1+2 | | 156,719 | 151,915 |
| Mw2 | | 80,415 | 87,233 |
| Tw1 | (°C) | 57.6 | 70.6 |
| Tw1+2 | (°C) | 73.5 | 77.2 |
| Tw2 | (°C) | 94.0 | 95.6 |
| (log(Mw1/Mw2))/ (Tw1-Tw2) | | -0.0118 | -0.0121 |
| Mw1 / Mw2 | | 2.68 | 2.01 |
| Tw1 - Tw2 | (°C) | -36.4 | -24.9 |

Table 2B

| Blend Composition and Characterization for the DOE | | | |
|---|---|---|---|
| | | BOCD Blends | |
| | | F1C4 | E2C4 |
| Blend Composition | | 40% F1 | 57% E2 |
| | | 60% C4 | 43% C4 |
| MI | (dg/min) | 0.96 | 0.96 |
| HLMI | (dg/min) | 18.7 | 16.6 |
| MIR | $(I_{21}/I_2)$ | 19.4 | 17.3 |
| Density | $(g/cm^3)$ | 0.920 | 0.920 |
| H-NMR File # | | hctl201607225715 | hctl201607225716 |
| Vinylene | (/1000C) | 0.05 | 0.03 |
| TSO | (/1000C) | 0.06 | 0.04 |
| Vinylene | (/1000C) | 0.01 | 0.00 |
| Vinylidene | (/1000C) | 0.01 | 0.01 |
| Total Unsat | (/1000C) | 0.13 | 0.08 |
| methyl w/o CE Correction | (/1000C) | 14.5 | 13.4 |
| GPC-4D Run # | | 16-2523 | 16-2471 |
| Mn GPC4D | (g/mol) | 39,789 | 40,654 |

(continued)

| Blend Composition and Characterization for the DOE | | | |
|---|---|---|---|
| | | BOCD Blends | |
| | | F1C4 | E2C4 |
| Mw GPC4D | (g/mol) | 118,092 | 118,003 |
| Mz GPC4D | (g/mol) | 229,354 | 221,081 |
| Mz+1 GPC4D | (g/mol) | 373,726 | 352,137 |
| Mw/Mn GPC4D | | 3.0 | 2.9 |
| Mz/Mw GPC4D | | 1.9 | 1.9 |
| Bulk C6 | (wt %) | 8.0 | 7.8 |
| g'(Vis Ave.) | | 0.98 | 1.00 |
| Recover | (%) | 100% | 101% |
| Cryo-TREFIR5 Run # | | 16-1021 | 16-1022 |
| SF Weight Fraction | (%) | 0.45 | 0.49 |
| Tw | (°C) | 78.73 | 79.76 |
| Tn | (°C) | 70.31 | 43.62 |
| T75-T25 | (°C) | 33 | 23 |
| Pk1 - Tmp | (°C) | 59.0 | 71.6 |
| Pk1 - Area | (%) | 37.3 | 50.8 |
| Pk2 - Tmp | (°C) | 93.1 | 92.9 |
| Pk2 - Area (LD component) | (%) | 62.3 | 48.7 |
| CFC File # | | 203-16CFC | 205-16CFC |
| 1st Half from CFC | (%) | 40.0% | 58.8% |
| 2nd Half from CFC | (%) | 60.0% | 41.2% |
| Mw1 | | 208,027 | 169,953 |
| Mw-1+2 | | 153,601 | 144,945 |
| Mw2 | | 117,892 | 109,577 |
| Tw1 | (°C) | 57.9 | 71.0 |
| Tw1+2 | (°C) | 79.1 | 80.3 |
| Tw2 | (°C) | 93.1 | 93.5 |
| (log(Mw1/Mw2))/ (Tw1-Tw2) | | -0.0070 | -0.0085 |
| Mw1 / Mw2 | | 1.76 | 1.55 |
| Tw1 - Tw2 | (°C) | -35.2 | -22.5 |

Table 2C

| Blend Composition and Characterization for the DOE | | | |
|---|---|---|---|
| | | NMWD / BCD Blends | |
| | | D1D5 | D2D5 |
| Blend Composition | | 54% D1 | 65% D2 |
| | | 46% D5 | 35% D5 |
| MI | (dg/min) | 0.89 | 0.92 |

(continued)

| Blend Composition and Characterization for the DOE | | | |
|---|---|---|---|
| | | NMWD / BCD Blends | |
| | | D1D5 | D2D5 |
| HLMI | (dg/min) | 15.5 | 15.4 |
| MIR | $(I_{21}/I_2)$ | 17.4 | 16.7 |
| Density | (g/cm$^3$) | 0.920 | 0.920 |
| H-NMR File # | | hctl201607225921 | hctl201607225723 |
| Vinylene | (/1000C) | 0.04 | 0.03 |
| TSO | (/1000C) | 0.01 | 0.01 |
| Vinylene | (/1000C) | 0.00 | 0.00 |
| Vinylidene | (/1000C) | 0.00 | 0.00 |
| Total Unsat | (/1000C) | 0.05 | 0.04 |
| methyl w/o CE Correction | (/1000C) | 17.8 | 15.2 |
| GPC-4D Run # | | 16-2476 | 16-2478 |
| Mn GPC4D | (g/mol) | 44,176 | 42,983 |
| Mw GPC4D | (g/mol) | 123,260 | 120,172 |
| Mz GPC4D | (g/mol) | 259,647 | 226,748 |
| Mz+1 GPC4D | (g/mol) | 865,141 | 395,340 |
| Mw/Mn GPC4D | | 2.8 | 2.8 |
| Mz/Mw GPC4D | | 2.1 | 1.9 |
| Bulk C6 | (wt %) | 10.2 | 8.7 |
| g'(Vis Ave.) | | 0.99 | 1.02 |
| Recover | (%) | 101% | 100% |
| Cryo-TREFIR5 Run # | | 16-1023 | 16-1035 |
| SF Weight Fraction | (%) | 0.65 | 0.71 |
| Tw | (°C) | 74.4 | 78.23 |
| Tn | (°C) | 62.55 | 68.05 |
| T75-T25 | (°C) | 43 | 31 |
| Pk1 - Tmp | (°C) | 57.1 | 68.3 |
| Pk1 - Area | (%) | 51.5 | 56.9 |
| Pk2 - Tmp | (°C) | 96.8 | 96.5 |
| Pk2 - Area (LD component) | (%) | 47.8 | 42.4 |
| CFC File # | | 209-16CFC | 212-16CFC |
| 1st Half from CFC | (%) | 52.7% | 63.4% |
| 2nd Half from CFC | (%) | 47.3% | 36.6% |
| Mw1 | | 148,392 | 150,307 |
| Mw-1+2 | | 168,761 | 164,363 |
| Mw2 | | 192,399 | 190,146 |
| Tw1 | (°C) | 53.2 | 65.7 |
| Tw1+2 | (°C) | 74.5 | 77.5 |

(continued)

| Blend Composition and Characterization for the DOE | | | |
|---|---|---|---|
| | | NMWD / BCD Blends | |
| | | D1D5 | D2D5 |
| Tw2 | (°C) | 99.2 | 99.2 |
| (log(Mw1/Mw2))/ (Tw1-Tw2) | | 0.0024 | 0.0031 |
| Mw1 / Mw2 | | 0.77 | 0.79 |
| Tw1 - Tw2 | (°C) | -46.1 | -33.4 |

Table 2D

| Blend Composition and Characterization for the DOE | | | |
|---|---|---|---|
| | | NMWD / BCD Blends | |
| | | D1D4 | D2D4 |
| Blend Composition | | 36% D1 | 47% D2 |
| | | 64% D4 | 53% D4 |
| MI | (dg/min) | 1.00 | 1.01 |
| HLMI | (dg/min) | 17.1 | 16.8 |
| MIR | $(I_{21}/I_2)$ | 17.1 | 16.6 |
| Density | $(g/cm^3)$ | 0.921 | 0.921 |
| H-NMR File # | | hetl201607225722 | hctl201607225724 |
| Vinylene | (/1000C) | 0.06 | 0.14 |
| TSO | (/1000C) | 0.05 | 0.07 |
| Vinylene | (/1000C) | 0.01 | 0.00 |
| Vinylidene | (/1000C) | 0.00 | 0.00 |
| Total Unsat | (/1000C) | 0.12 | 0.21 |
| methyl w/o CE Correction | (/1000C) | 13.8 | 12.2 |
| GPC-4D Run # | | 16-2477 | 16-2479 |
| Mn GPC4D | (g/mol) | 43,741 | 42,227 |
| Mw GPC4D | (g/mol) | 117,413 | 115,750 |
| Mz GPC4D | (g/mol) | 217,217 | 214,700 |
| Mz+1 GPC4D | (g/mol) | 357,115 | 357,152 |
| Mw/Mn GPC4D | | 2.7 | 2.7 |
| Mz/Mw GPC4D | | 1.9 | 1.9 |
| Bulk C6 | (wt %) | 8.1 | 7.3 |
| g'(Vis Ave.) | | 1.04 | 1.02 |
| Recover | (%) | 100% | 102% |
| Cryo-TREFIR5 Run # | | 16-1024 | 16-1036 |
| SF Weight Fraction | (%) | 0.42 | 0.74 |
| Tw | (°C) | 79.51 | 80.92 |
| Tn | (°C) | 69.67 | 69.09 |
| T75-T25 | (°C) | 35 | 26 |

(continued)

| Blend Composition and Characterization for the DOE | | | |
|---|---|---|---|
| | | NMWD / BCD Blends | |
| | | D1D4 | D2D4 |
| Pk1 - Tmp | (°C) | 56.8 | 68.3 |
| Pk1 - Area | (%) | 35.1 | 40.5 |
| Pk2 - Tmp | (°C) | 93.6 | 93.5 |
| Pk2 - Area (LD component) | (%) | 64.5 | 58.8 |
| CFC File # | | 210-16CFC | 213-16CFC |
| 1st Half from CFC | (%) | 36.1% | 46.6% |
| 2nd Half from CFC | (%) | 63.9% | 53.4% |
| Mw1 | | 138,218 | 140,981 |
| Mw-1+2 | | 153,429 | 149,152 |
| Mw2 | | 161,826 | 156,153 |
| Tw1 | (°C) | 55.2 | 66.3 |
| Tw1+2 | (°C) | 80.3 | 81.3 |
| Tw2 | (°C) | 94.2 | 94.2 |
| (log(Mw1/Mw2))/ (Tw1-Tw2) | | 0.0018 | 0.0016 |
| Mw1 / Mw2 | | 0.85 | 0.90 |
| Tw1 - Tw2 | (°C) | -39.0 | -27.9 |

Table 2E

| Blend Composition and Characterization for the DOE | | | |
|---|---|---|---|
| | | Conventional CD Blends | |
| | | B1F5 | C2F5 |
| Blend Composition | | 57% B1 | 70% C2 |
| | | 43% F4 | 30% F5 |
| MI | (dg/min) | 1.03 | 1.09 |
| HLMI | (dg/min) | 23.1 | 20.6 |
| MIR | ($I_{21}/I_2$) | 22.4 | 18.9 |
| Density | (g/cm$^3$) | 0.920 | 0.919 |
| H-NMR File # | | hctl201607225717 | hctl201607225719 |
| Vinylene | (/1000C) | 0.03 | 0.02 |
| TSO | (/1000C) | 0.00 | 0.02 |
| Vinylene | (/1000C) | 0.01 | 0.00 |
| Vinylidene | (/1000C) | 0.00 | 0.01 |
| Total Unsat | (/1000C) | 0.04 | 0.05 |
| methyl w/o CE Correction | (/1000C) | 19.3 | 16.7 |
| GPC-4D Run # | | 16-2549 | 16-2474 |
| Mn GPC4D | (g/mol) | 34,439 | 37,636 |
| Mw GPC4D | (g/mol) | 124,443 | 118,448 |

(continued)

| Blend Composition and Characterization for the DOE | | | |
|---|---|---|---|
| | | Conventional CD Blends | |
| | | B1F5 | C2F5 |
| Mz GPC4D | (g/mol) | 344,355 | 292,905 |
| Mz+1 GPC4D | (g/mol) | 781,081 | 671,307 |
| Mw/Mn GPC4D | | 3.6 | 3.1 |
| Mz/Mw GPC4D | | 2.8 | 2.5 |
| Bulk C6 | (wt %) | 10.9 | 9.5 |
| g'(Vis Ave.) | | 1.03 | 1.01 |
| Recover | (%) | 99% | 100% |
| Cryo-TREFIR5 Run # | | 16-1044 | 16-1046 |
| SF Weight Fraction | (%) | 0.86 | 0.35 |
| Tw | (°C) | 72.67 | 75.4 |
| Tn | (°C) | 62.14 | 68.78 |
| T75-T25 | (°C) | 46 | 34 |
| Pk1 - Tmp | (°C) | 54.2 | 67.2 |
| Pk1 - Area | (%) | 53.4 | 64.2 |
| Pk2 - Tmp | (°C) | 97.4 | 96.9 |
| Pk2 - Area (LD component) | (%) | 45.8 | 35.4 |
| CFC File # | | 201-16CFC | 207-16CFC |
| 1st Half from CFC | (%) | 55.3% | 68.4% |
| 2nd Half from CFC | (%) | 44.7% | 31.6% |
| Mw1 | | 82,070 | 104,587 |
| Mw-1+2 | | 174,440 | 165,860 |
| Mw2 | | 292,715 | 305,085 |
| Tw1 | (°C) | 50.3 | 63.7 |
| Tw1+2 | (°C) | 72.1 | 74.8 |
| Tw2 | (°C) | 100.1 | 100.0 |
| (log(Mw1/Mw2))/ (Tw1-Tw2) | | 0.0111 | 0.0128 |
| Mw1 / Mw2 | | 0.28 | 0.34 |
| Tw1 - Tw2 | (°C) | -49.8 | -36.3 |

Table 2F

| Blend Composition and Characterization for the DOE | | | |
|---|---|---|---|
| | | Conventional CD Blends | |
| | | B1E4 | C2E4 |
| Blend Composition | | 39% B1 | 53% C2 |
| | | 61% E4 | 47% E4 |
| MI | (dg/min) | 1.04 | 1.09 |
| HLMI | (dg/min) | 19.2 | 18.4 |

(continued)

| Blend Composition and Characterization for the DOE | | | |
|---|---|---|---|
| | | Conventional CD Blends | |
| | | B1E4 | C2E4 |
| MIR | ($I_{21}/I_2$) | 18.4 | 16.9 |
| Density | (g/cm³) | 0.922 | 0.921 |
| H-NMR File # | | hctl201607225718 | hctl201607225720 |
| Vinylene | (/1000C) | 0.07 | 0.06 |
| TSO | (/1000C) | 0.05 | 0.04 |
| Vinylene | (/1000C) | 0.01 | 0.00 |
| Vinylidene | (/1000C) | 0.01 | 0.00 |
| Total Unsat | (/1000C) | 0.14 | 0.10 |
| methyl w/o CE Correction | (/1000C) | 14.4 | 14.2 |
| GPC-4D Run # | | 16-2473 | 16-2475 |
| Mn GPC4D | (g/mol) | 39,193 | 39,901 |
| Mw GPC4D | (g/mol) | 120,501 | 116,164 |
| Mz GPC4D | (g/mol) | 226,245 | 240,887 |
| Mz+1 GPC4D | (g/mol) | 525,790 | 455,451 |
| Mw/Mn GPC4D | | 3.1 | 2.9 |
| Mz/Mw GPC4D | | 1.9 | 2.1 |
| Bulk C6 | (wt %) | 8.3 | 8.0 |
| g'(Vis Ave.) | | 1.03 | 1.04 |
| Recover | (%) | 101% | 101% |
| Cryo-TREFIR5 Run # | | 16-1045 | 16-1047 |
| SF Weight Fraction | (%) | 0.47 | 0.37 |
| Tw | (°C) | 78.02 | 78.65 |
| Tn | (°C) | 68.69 | 72.35 |
| T75-T25 | (°C) | 39 | 30 |
| Pk1 - Tmp | (°C) | 54.7 | 67.3 |
| Pk1 - Area | (%) | 38.0 | 49.7 |
| Pk2 - Tmp | (°C) | 94.4 | 94.4 |
| Pk2 - Area (LD component) | (%) | 61.6 | 49.9 |
| CFC File # | | 206-16CFC | 208-16CFC |
| 1st Half from CFC | (%) | 38.8% | 53.2% |
| 2nd Half from CFC | (%) | 61.2% | 46.8% |
| Mw1 | | 77,060 | 98,864 |
| Mw-1+2 | | 160,795 | 147,613 |
| Mw2 | | 214,922 | 202,198 |
| Tw1 | (°C) | 53.7 | 65.1 |
| Tw1+2 | (°C) | 80.8 | 79.6 |
| Tw2 | (°C) | 98.4 | 95.9 |

(continued)

| Blend Composition and Characterization for the DOE | | |
|---|---|---|
| | Conventional CD Blends | |
| | B1E4 | C2E4 |
| (log(Mw1/Mw2))/ (Tw1-Tw2) | 0.0100 | 0.0101 |
| Mw1 / Mw2 | 0.36 | 0.49 |
| Tw1 - Tw2 (°C) | -44.7 | -30.9 |

Table 2G

| Blend Composition and Characterization for the DOE | | |
|---|---|---|
| | NMWD / NCD Controls | |
| | D3 | Exceed 1018 |
| Blend Composition | 100% D3 | 100% Exceed 1018 |
| MI (dg/min) | 1.08 | .99 |
| HLMI (dg/min) | 16.8 | 15.1 |
| MIR ($I_{21}/I_2$) | 15.6 | 15.2 |
| Density (g/cm$^3$) | 0.920 | 0.919 |
| H-NMR File # | hetl201607225725 | - |
| Vinylene (/1000C) | 0.01 | 0.01 |
| TSO (/1000C) | 0.02 | 0.05 |
| Vinylene (/1000C) | 0.01 | 0.06 |
| Vinylidene (/1000C) | 0.01 | 0.02 |
| Total Unsat (/1000C) | 0.05 | 0.13 |
| methyl w/o CE Correction (/1000C) | 10.5 | 11.7 |
| GPC-4D Run # | 16-2480 | 17-1057 |
| Mn GPC4D (g/mol) | 38,826 | 42,694 |
| Mw GPC4D (g/mol) | 112,293 | 115,629 |
| Mz GPC4D (g/mol) | 199,594 | 207,754 |
| Mz+1 GPC4D (g/mol) | 301,719 | 321,990 |
| Mw/Mn GPC4D | 2.9 | 2.7 |
| Mz/Mw GPC4D | 1.8 | 1.8 |
| Bulk C6 (wt %) | 6.2 | 6.3 |
| g'(Vis Ave.) | 1.02 | - |
| Recover (%) | 101% | 101% |
| Cryo-TREFIR5 Run # | 16-1048 | 18-0093 |
| SF Weight Fraction (%) | 0.36 | 0.23 |
| Tw (°C) | 82.35 | 81.98 |
| Tn (°C) | 73.3 | 79.96 |
| T75-T25 (°C) | 7 | 10 |
| Pk1 - Tmp (°C) | 87.8 | 83.6 |
| Pk1 - Area (%) | 99.6 | 99.8 |

(continued)

| Cryo-TREFIR5 Run # | | 16-1048 | 18-0093 |
|---|---|---|---|
| Pk2 - Tmp | (°C) | - | - |
| Pk2 - Area (LD component) | (%) | - | - |
| CFC File # | | 211-16CFC | 150-16CFC |
| 1st Half from CFC | (%) | 48.3% | 49.4% |
| 2nd Half from CFC | (%) | 51.7% | 50.6% |
| Mw1 | | 152,348 | 165,078 |
| Mw-1+2 | | 152,806 | 156,788 |
| Mw2 | | 153,228 | 148,679 |
| Tw1 | (°C) | 77.8 | 75.5 |
| Tw1+2 | (°C) | 83.2 | 82.0 |
| Tw2 | (°C) | 88.1 | 88.3 |
| (log(Mw1/Mw2))/ (Tw1-Tw2) | | 0.0002 | -0.0036 |
| Mw1 / Mw2 | | 0.99 | 1.11 |
| Tw1 - Tw2 | (°C) | -10.3 | -12.8 |

As set out above, the polyethylene compositions in Tables 1A through 1G were lettered and numbered according to their approximate densities and MIs. Numbers increased as density increased, while lettering progressed as MI decreased. For example, B1, D1, and F1 all have densities below 0.900 g/cm$^3$, while B5, D5, and F5 all have densities greater than 0.950 g/cm$^3$. As a further example, B1 and B5 both have MIs greater than 7.0 g/10 min, while F1 and F5 both have MIs less than 0.30 g/10 min.

Tables 3A through 3F and 4A through 4F provide data for the extrusion process used to create the blown films from the inventive polyethylene blends and references. All the films were produced with a screw speed of 30 rpm, a blow-up ratio of 2.5, a die gap of 60 mil, and a film thickness of 1.0 mil.

Table 3A

| Film Blowing Data at 1.0 mil Gauge | | | | |
|---|---|---|---|---|
| | F1B5 | E2B5 | F1C4 | EC24 |
| | @ 1mil | @ 1mil | @ 1mil | @ 1mil |
| | BOCD | BOCD | BOCD | BOCD |
| Screw Speed (rpm) | 30 | 30 | 30 | 30 |
| Specific Output (lb/hr-rpm) | 1.47 | 1.47 | 1.47 | 1.47 |
| Die Sp. Output (lb/hr-in-die) | 7.0 | 7.0 | 7.0 | 7.0 |
| Motor Load (%) | 50 | 52 | 51 | 52 |
| Melt Temperature (°F) | 350 | 350 | 350 | 351 |
| Heat Pressure (psi) | 3,950 | 4,260 | 4,085 | 4,355 |
| Die Gap (mil) | 60 | 60 | 60 | 60 |
| Blower (%) | 63 | 63 | 63 | 63 |
| Take-up (ft/min) | 98 | 96 | 96 | 96 |
| Frost Line Height (in) | 11.3 | 11.3 | 11.3 | 11.3 |
| Blow up Ratio | 2.5 | 2.5 | 2.5 | 2.5 |
| DDR | 21.2 | 21.6 | 21.5 | 21.6 |

Table 3B

| Film Blowing Data at 1.0 mil Gauge | | |
|---|---|---|
| | D1D5 | D2D5 |
| | @ 1mil | @ 1mil |
| | NMWD/BCD | NMWD/BCD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 53 | 53 |
| Melt Temperature (°F) | 351 | 352 |
| Heat Pressure (psi) | 4,260 | 4,360 |
| Die Gap (mil) | 61 | 63 |
| Blower (%) | 63 | 63 |
| Take-up (ft/min) | 98 | 98 |
| Frost Line Height (in) | 11.3 | 11.3 |
| Blow up Ratio | 2.5 | 2.5 |
| DDR | 21.5 | 22.0 |

Table 3C

| Film Blowing Data at 1.0 mil Gauge | | |
|---|---|---|
| | D1D4 | D2D4 |
| | @ 1mil | @ 1mil |
| | NMWD/BCD | NMWD/BCD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 53 | 53 |
| Melt Temperature (°F) | 351 | 350 |
| Heat Pressure (psi) | 4,145 | 4,260 |
| Die Gap (mil) | 62 | 64 |
| Blower (%) | 63 | 63 |
| Take-up (ft/min) | 98 | 98 |
| Frost Line Height (in) | 11.3 | 11.3 |
| Blow up Ratio | 2.5 | 2.5 |
| DDR | 21.3 | 21.9 |

Table 3D

| Film Blowing Data at 1.0 mil Gauge | | |
|---|---|---|
| | B1F5 | C2F5 |
| | @ 1mil | @ 1mil |
| | Conv. CD | Conv. CD |
| Screw Speed (rpm) | 30 | 30 |

(continued)

| Film Blowing Data at 1.0 mil Gauge | | |
| --- | --- | --- |
| | B1F5 | C2F5 |
| | @ 1mil | @ 1mil |
| | Conv. CD | Conv. CD |
| Specific Output (lb/hr-rpm) | 1.47 | 1.47 |
| Die Sp. Output (lb/hr-in-die) | 7.0 | 7.0 |
| Motor Load (%) | 49 | 51 |
| Melt Temperature (°F) | 349 | 350 |
| Heat Pressure (psi) | 3,770 | 4,065 |
| Die Gap (mil) | 60 | 60 |
| Blower (%) | 60 | 60 |
| Take-up (ft/min) | 98 | 98 |
| Frost Line Height (in) | 11.3 | 11.3 |
| Blow up Ratio | 2.5 | 2.5 |
| DDR | 22.5 | 21.8 |

Table 3E

| Film Blowing Data at 1.0 mil Gauge | | |
| --- | --- | --- |
| | B1E4 | C2E4 |
| | @ 1mil | @ 1mil |
| | Conv. CD | Conv. CD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 50 | 51 |
| Melt Temperature (°F) | 351 | 351 |
| Heat Pressure (psi) | 4,065 | 4,175 |
| Die Gap (mil) | 60 | 60 |
| Blower (%) | 60 | 60 |
| Take-up (ft/min) | 98 | 98 |
| Frost Line Height (in) | 11.3 | 11.3 |
| Blow up Ratio | 2.5 | 2.5 |
| DDR | 22.0 | 21.8 |

Table 3F

| Film Blowing Data at 1.0 mil Gauge | | |
| --- | --- | --- |
| | D3 | Exceed 1018 |
| | @ 1mil | @ 1mil |
| | NMWD/NCD Control | NMWD/NCD Control |
| Screw Speed (rpm) | 30 | 30 |
| Specific Output (lb/hr-rpm) | 1.47 | 1.47 |

(continued)

| Film Blowing Data at 1.0 mil Gauge | | |
|---|---|---|
| | D3 | Exceed 1018 |
| | @ 1mil | @ 1mil |
| | NMWD/NCD Control | NMWD/NCD Control |
| Die Sp. Output (lb/hr-in-die) | 7.0 | 7.0 |
| Motor Load (%) | 52 | 53 |
| Melt Temperature (°F) | 350 | 351 |
| Heat Pressure (psi) | 4,205 | 4,290 |
| Die Gap (mil) | 65 | 60 |
| Blower (%) | 63 | 66 |
| Take-up (ft/min) | 98 | 97 |
| Frost Line Height (in) | 11.3 | 11.3 |
| Blow up Ratio | 2.5 | 2.5 |
| DDR | 23.5 | 21.0 |

Table 4A

| Film Blowing Data at 3.0 mil Gauge | | | | |
|---|---|---|---|---|
| | F1B5 | E2B5 | F1C4 | EC24 |
| | @ 3mil | @ 3mil | @ 3mil | @ 3mil |
| | BOCD | BOCD | BOCD | BOCD |
| Screw Speed (rpm): | 30 | 30 | 30 | 30 |
| Specific Output (lb/hr-rpm) | 1.47 | 1.47 | 1.47 | 1.47 |
| Die Sp. Output (lb/hr-in-die) | 7 | 7 | 7 | 7 |
| Motor Load (%) | 50 | 52 | 51 | 52 |
| Melt Temperature (°F) | 350 | 350 | 350 | 351 |
| Heat Pressure (psi) | 3,950 | 4,260 | 4,085 | 4,355 |
| Die Gap (mil) | 60 | 60 | 60 | 60 |
| Blower (%) | 63 | 63 | 63 | 63 |
| Take-up (ft/min) | 98 | 96 | 96 | 96 |
| Frost Line Height (in) | 11.3 | 11.3 | 11.3 | 11.3 |
| Blow up Ratio | 2.5 | 2.5 | 2.5 | 2.5 |
| DDR | 21.2 | 21.6 | 21.5 | 21.6 |

Table 4B

| Film Blowing Data at 3.0 mil Gauge | | |
|---|---|---|
| | D1D5 @ 3mil | D2D5 @ 3mil |
| | NMWD/BCD | NMWD/BCD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 53 | 53 |

(continued)

| Film Blowing Data at 3.0 mil Gauge | | |
|---|---|---|
| | D1D5 @ 3mil | D2D5 @ 3mil |
| | NMWD/BCD | NMWD/BCD |
| Melt Temperature (°F) | 351 | 352 |
| Heat Pressure (psi) | 4,365 | 4,460 |
| Die Gap (mil) | 60 | 60 |
| Blower (%) | 58 | 58 |
| Take-up (ft/min) | 31 | 31 |
| Frost Line Height (in) | 11.3 | 11.3 |
| Blow up Ratio | 2.5 | 2.5 |
| DDR | 7.6 | 7.5 |

Table 4C

| Film Blowing Data at 3.0 mil Gauge | | |
|---|---|---|
| | D1D4 @ 3mil | D2D4 @ 3mil |
| | NMWD/BCD | NMWD/BCD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 53 | 53 |
| Melt Temperature (°F) | 351 | 351 |
| Heat Pressure (psi) | 4,210 | 4,315 |
| Die Gap (mil) | 60 | 60 |
| Blower (%) | 58 | 58 |
| Take-up (ft/min) | 31 | 31 |
| Frost Line Height (in) | 11.3 | 11.3 |
| Blow up Ratio | 2.5 | 2.5 |
| DDR | 7.4 | 7.5 |

Table 4D

| Film Blowing Data at 3.0 mil Gauge | | |
|---|---|---|
| | B1F5 @ 3mil | C2F5 @ 3mil |
| | Conv.CD | Conv.CD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 49 | 50 |
| Melt Temperature (°F) | 350 | 350 |
| Heat Pressure (psi) | 3,845 | 4,035 |

(continued)

| Film Blowing Data at 3.0 mil Gauge | | |
| --- | --- | --- |
| | B1F5 @ 3mil | C2F5 @ 3mil |
| | Conv.CD | Conv.CD |
| Die Gap (mil) | 60 | 60 |
| Blower (%) | 55 | 55 |
| Take-up (ft/min) | 32 | 32 |
| Frost Line Height (in) | 11.3 | 11.3 |
| Blow up Ratio | 2.5 | 2.5 |
| DDR | 8.0 | 7.9 |

Table 4E

| Film Blowing Data at 3.0 mil Gauge | | |
| --- | --- | --- |
| | B1E4 @ 3mil | C2E4 @ 3mil |
| | Conv.CD | Conv.CD |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 51 | 51 |
| Melt Temperature (°F) | 351 | 351 |
| Heat Pressure (psi) | 4,100 | 4,160 |
| Die Gap (mil) | 60 | 60 |
| Blower (%) | 55 | 58 |
| Take-up (ft/min) | 32 | 32 |
| Frost Line Height (in) | 11.3 | 11.3 |
| Blow up Ratio | 2.5 | 2.5 |
| DDR | 8.1 | 7.8 |

Table 4F

| Film Blowing Data at 3.0 mil Gauge | | |
| --- | --- | --- |
| | D3 @ 3mil | Exceed 1018 @ 3mil |
| | NMWD/NCD Control | NMWD/NCD Control |
| Screw Speed (rpm) | 30 | 30 |
| Specific Output (lb/hr-rpm) | 1.47 | 1.47 |
| Die Sp. Output (lb/hr-in-die) | 7.0 | 7.0 |
| Motor Load (%) | 52 | 53 |
| Melt Temperature (°F) | 350 | 352 |
| Heat Pressure (psi) | 4,270 | 4,330 |
| Die Gap (mil) | 60 | 60 |

(continued)

| Film Blowing Data at 3.0 mil Gauge | | |
|---|---|---|
| | D3<br>@ 3mil | Exceed 1018<br>@ 3mil |
| | NMWD/NCD Control | NMWD/NCD Control |
| Blower (%) | 58 | 64 |
| Take-up (ft/min) | 32 | 30 |
| Frost Line Height (in) | 11.3 | 11.3 |
| Blow up Ratio | 2.5 | 2.5 |
| DDR | 7.5 | 7.5 |

Tables 5A through 5E and 6A through 6E below provide properties of blown films created from the inventive polyethylene blends and reference blends having a film thickness of approximately 1.0 and 3.0 mils, respectively.

Table 5A

| Film Property at 1.0 mil | | | | |
|---|---|---|---|---|
| | | F1B5<br>@ 1 mil | E2B5<br>@ 1 mil | F1C4<br>@ 1 mil |
| | Method Used | | | |
| Gauge Mic (mils) | ASTM D6988 | | | |
| Average | | 1.1 | 1.1 | 1.2 |
| 1% Secant (psi) | ExxonMobil | | | |
| MD | | 30,051 | 27,929 | 33,045 |
| TD | | 43,568 | 32,842 | 38,065 |
| Avg | | 36,810 | 30,386 | 35,555 |
| Tensile | ExxonMobil | | | |
| Yield Strength(psi) | | | | |
| MD | | 1,350 | 1,244 | 1,463 |
| TD | | 1,666 | 1,403 | 1,666 |
| Elongation @ Yield (%) | | | | |
| MD | | 5.7 | 5.4 | 6.0 |
| TD | | 7.0 | 5.6 | 5.9 |
| Tensile Strength (psi) | | | | |
| MD | | 7,642 | 8,058 | 8,297 |
| TD | | 8,275 | 9,004 | 8,214 |
| Elongation @ Break (%) | | | | |
| MD | | 396 | 417 | 439 |
| TD | | 590 | 602 | 650 |
| Elmendorf Tear | ASTM D1922 | | | |
| MD (g/mil) | | 225 | 247 | 365 |
| TD (g/mil) | | 411 | 440 | 537 |
| Haze (%) | ASTM D1003 | 15.5 | 10.8 | 10.5 |
| Internal (%) | ExxonMobil | 3.92 | 2.71 | 3.08 |

(continued)

| Film Property at 1.0 mil | | | | |
|---|---|---|---|---|
| Gloss (GU) | ASTM D2457 | | | |
| MD | | 37 | 46 | 47 |
| TD | | 44 | 55 | 58 |
| Dart Drop | ExxonMobil | | | |
| Phenolic | | | | |
| Method A | | | | |
| (g/mil) | | 979 | 894 | 597 |
| Dart Drop | ExxonMobil | | | |
| Stainless Steel | | | | |
| Method B | | | | |
| (g/mil) | | | | |
| Puncture | ExxonMobil | | | |
| BTEC Probe B1 | | | | |
| Peak Force (lbs/mil) | | 9.84 | 10.68 | 9.86 |
| Break Energy (in-lbs/mil) | | 28.14 | 31.74 | 27.92 |
| Heat Seal | ExxonMobil | | | |
| Seal initiation temperature at 1 N force (°C) | | 86.0 | < 95 | 90.6 |
| Seal temperature at 5 N force (°C) | | 90.1 | 97.2 | 96.9 |
| Maximum seal force (N) | | 14.2 | 13.0 | 14.8 |
| Hot Tack | ExxonMobil | | | |
| Hot tack initiation temperature at 1 N force (°C) | | 84.4 | 92.7 | 93.0 |
| Seal temperature at 5 N force (°C) | | 89.7 | 100.2 | 100.4 |
| Maximum hot tack force (N) | | 14.6 | 13.0 | 11.8 |

Table 5B

| Film Property at 1.0 mil | | | | |
|---|---|---|---|---|
| | | E2C4 @ 1 mil | D1D5 @ 1 mil | D2D5 @ 1 mil |
| | Method Used | | | |
| Gauge Mic (mils) | ASTM D6988 | | | |
| Average | | 1.1 | 1.1 | 1.2 |
| 1% Secant (psi) | ExxonMobil | | | |
| MD | | 29,039 | 35,554 | 33,020 |
| TD | | 33,097 | 39,411 | 36,708 |
| Avg | | 31,068 | 37,483 | 34,864 |
| Tensile | ExxonMobil | | | |
| Yield Strength(psi) | | | | |
| MD | | 1,418 | 1,512 | 1,517 |
| TD | | 1,540 | 1,590 | 1,533 |
| Elongation @ Yield (%) | | | | |

(continued)

| Film Property at 1.0 mil | | | | |
|---|---|---|---|---|
| MD | | 6.1 | 7.1 | 7.2 |
| TD | | 6.1 | 6.4 | 5.9 |
| Tensile Strength (psi) | | | | |
| MD | | 9,040 | 8,022 | 8,982 |
| TD | | 8,360 | 7,564 | 8,415 |
| Elongation @ Break (%) | | | | |
| MD | | 452 | 535 | 518 |
| TD | | 623 | 637 | 654 |
| Elmendorf Tear | ASTM D1922 | | | |
| MD (g/mil) | | 275 | 461 | 440 |
| TD (g/mil) | | 455 | 524 | 593 |
| Haze (%) | ASTM D1003 | 7.7 | 12.5 | 9.8 |
| Internal (%) | ExxonMobil | 3.02 | 4.35 | 5.82 |
| Gloss (GU) | ASTM D2457 | | | |
| MD | | 48 | 48 | 44 |
| TD | | 59 | 55 | 49 |
| Dart Drop | ExxonMobil | | | |
| Phenolic | | | | |
| Method A | | | | |
| (g/mil) | | 735 | 560 | 602 |
| Dart Drop | ExxonMobil | | | |
| Stainless Steel | | | | |
| Method B | | | | |
| (g/mil) | | | | |
| Puncture | ExxonMobil | | | |
| BTEC Probe B1 | | | | |
| Peak Force (lbs/mil) | | 10.51 | 9.82 | 9.86 |
| Break Energy (in-lbs/mil) | | 29.27 | 31.58 | 28.83 |
| Heat Seal | ExxonMobil | | | |
| Seal initiation temperature at 1 N force (°C) | | 95.0 | <75 | <90 |
| Seal temperature at 5 N force (°C) | | 100.8 | 80.4 | 92.1 |
| Maximum seal force (N) | | 13.4 | 13.7 | 14.2 |
| Hot Tack | ExxonMobil | | | |
| Hot tack initiation temperature at 1 N force (°C) | | 96.3 | 80.7 | 90.2 |
| Seal temperature at 5 N force (°C) | | 101.2 | 90.0 | 92.8 |
| Maximum hot tack force (N) | | 12.1 | 11.1 | 9.4 |

Table 5C

| Film Property at 1.0 mil | | | | |
|---|---|---|---|---|
| | | D1D4 @ 1 mil | D2D4 @ 1 mil | B1F5 @ 1 mil |
| | Method Used | | | |
| Gauge Mic (mils) | ASTM D6988 | | | |
| Average | | 1.2 | 1.2 | 1.1 |
| 1% Secant (psi) | ExxonMobil | | | |
| MD | | 33,953 | 33,268 | 35,359 |
| TD | | 40,576 | 38,362 | 42,595 |
| Avg | | 37,265 | 35,815 | 38,977 |
| Tensile | ExxonMobil | | | |
| Yield Strength(psi) | | | | |
| MD | | 1,497 | 1,557 | 1,483 |
| TD | | 1,660 | 1,653 | 1,703 |
| Elongation @ Yield (%) | | | | |
| MD | | 5.5 | 6.6 | 6.5 |
| TD | | 5.2 | 6.0 | 5.8 |
| Tensile Strength (psi) | | | | |
| MD | | 8,311 | 9,364 | 7,544 |
| TD | | 8,300 | 8,270 | 7,037 |
| Elongation @ Break (%) | | | | |
| MD | | 516 | 519 | 728 |
| TD | | 690 | 686 | 774 |
| Elmendorf Tear | ASTM D1922 | | | |
| MD (g/mil) | | 406 | 296 | 442 |
| TD (g/mil) | | 573 | 579 | 622 |
| Haze (%) | ASTM D1003 | 8.5 | 7.6 | 15.5 |
| Internal (%) | ExxonMobil | 3.05 | 3.07 | 4.45 |
| Gloss (GU) | ASTM D2457 | | | |
| MD | | 65 | 61 | 37 |
| TD | | 65 | 65 | 46 |
| Dart Drop | ExxonMobil | | | |
| Phenolic | | | | |
| Method A | | | | |
| (g/mil) | | 252 | 311 | 138 |
| Dart Drop | ExxonMobil | | | |
| Stainless Steel | | | | |
| Method B | | | | |
| (g/mil) | | | | |
| Puncture | ExxonMobil | | | |
| BTEC Probe B1 | | | | |

(continued)

| Film Property at 1.0 mil | | | | |
|---|---|---|---|---|
| | | D1D4 @ 1 mil | D2D4 @ 1 mil | B1F5 @ 1 mil |
| Peak Force (lbs/mil) | | 10.67 | 10.35 | 9.00 |
| Break Energy (in-lbs/mil) | | 32.84 | 31.20 | 27.10 |
| Heat Seal | ExxonMobil | | | |
| Seal initiation temperature at 1 N force (°C) | | <90 | < 95 | 75.5 |
| Seal temperature at 5 N force (°C) | | 92.4 | 101.6 | 82.1 |
| Maximum seal force (N) | | 15.0 | 14.9 | 15.4 |
| Hot Tack | ExxonMobil | | | |
| Hot tack initiation temperature at 1 N force (°C) | | 92.6 | 100.4 | 82.4 |
| Seal temperature at 5 N force (°C) | | 101.9 | 103.4 | 116.7 |
| Maximum hot tack force (N) | | 10.0 | 9.0 | 5.8 |

Table 5D

| Film Property at 1.0 mil | | | | |
|---|---|---|---|---|
| | | C2F5 @ 1 mil | B1E4 @ 1 mil | C2E4 @ 1 mil |
| | Method Used | | | |
| Gauge Mic (mils) | ASTM D6988 | | | |
| Average | | 1.2 | 1.1 | 1.2 |
| 1% Secant (psi) | ExxonMobil | | | |
| MD | | 30,533 | 37,078 | 32,511 |
| TD | | 34,492 | 44,490 | 36,527 |
| Avg | | 32,523 | 40,784 | 34,519 |
| Tensile | ExxonMobil | | | |
| Yield Strength(psi) | | | | |
| MD | | 1,380 | 1,627 | 1,494 |
| TD | | 1,459 | 1,852 | 1,600 |
| Elongation @ Yield (%) | | | | |
| MD | | 6.6 | 7.4 | 5.9 |
| TD | | 5.8 | 5.9 | 5.8 |
| Tensile Strength (psi) | | | | |
| MD | | 8,015 | 7,630 | 8,426 |
| TD | | 7,204 | 7,297 | 7,743 |
| Elongation @ Break (%) | | | | |
| MD | | 630 | 603 | 583 |
| TD | | 680 | 765 | 717 |
| Elmendorf Tear | ASTM D1922 | | | |
| MD (g/mil) | | 422 | 298 | 391 |
| TD (g/mil) | | 641 | 635 | 559 |

(continued)

| Film Property at 1.0 mil | | C2F5 @ 1 mil | B1E4 @ 1 mil | C2E4 @ 1 mil |
|---|---|---|---|---|
| Haze (%) | ASTM D1003 | 12.3 | 10.9 | 8.7 |
| Internal (%) | ExxonMobil | 5.07 | 3.1 | 6.14 |
| Gloss (GU) | ASTM D2457 | | | |
| MD | | 44 | 48 | 65 |
| TD | | 42 | 53 | 57 |
| Dart Drop | ExxonMobil | | | |
| Phenolic | | | | |
| Method A | | | | |
| (g/mil) | | 263 | 121 | 171 |
| Dart Drop | ExxonMobil | | | |
| Stainless Steel | | | | |
| Method B | | | | |
| (g/mil) | | | | |
| Puncture | ExxonMobil | | | |
| BTEC Probe B1 | | | | |
| Peak Force (lbs/mil) | | 9.06 | 9.58 | 9.92 |
| Break Energy (in-lbs/mil) | | 27.21 | 27.38 | 29.03 |
| Heat Seal | ExxonMobil | | | |
| Seal initiation temperature at 1 N force (°C) | | 85.6 | <90 | 91.4 |
| Seal temperature at 5 N force (°C) | | 91.9 | 97.1 | 97.2 |
| Maximum seal force (N) | | 14.8 | 15.1 | 14.2 |
| Hot Tack | ExxonMobil | | | |
| Hot tack initiation temperature at 1 N force (°C) | | 88.6 | 100.5 | 97.9 |
| Seal temperature at 5 N force (°C) | | 94.4 | 114.5 | 103.7 |
| Maximum hot tack force (N) | | 6.9 | 5.4 | 6.8 |

Table 5E

| Film Property at 1.0 mil | | D3 @ 1 mil | 1018 @ 1 mil |
|---|---|---|---|
| | Method Used | | |
| Gauge Mic (mils) | ASTM D6988 | | |
| Average | | 1.1 | 1.2 |
| 1% Secant (psi) | ExxonMobil | | |
| MD | | 28,251 | 26,516 |
| TD | | 30,499 | 29,456 |
| Avg | | 29,375 | 27,986 |
| Tensile | ExxonMobil | | |

(continued)

| Film Property at 1.0 mil | | | |
|---|---|---|---|
| | | D3 @ 1 mil | 1018 @ 1 mil |
| Yield Strength(psi) | | | |
| MD | | 1,366 | 1,364 |
| TD | | 1,472 | 1,400 |
| Elongation @ Yield (%) | | | |
| MD | | 6.0 | 6.4 |
| TD | | 5.8 | 5.6 |
| Tensile Strength (psi) | | | |
| MD | | 8,483 | 10,252 |
| TD | | 8,660 | 9,263 |
| Elongation @ Break (%) | | | |
| MD | | 488 | 479 |
| TD | | 661 | 624 |
| Elmendorf Tear | ASTM D1922 | | |
| MD (g/mil) | | 283 | 257 |
| TD (g/mil) | | 440 | 422 |
| Haze (%) | ASTM D1003 | 5.9 | 8.9 |
| Internal (%) | ExxonMobil | 2.24 | 2.12 |
| Gloss (GU) | ASTM D2457 | | |
| MD | | 66 | 58 |
| TD | | 63 | 57 |
| Dart Drop | ExxonMobil | | |
| Phenolic | | | |
| Method A | | | |
| (g/mil) | | 386 | 597 |
| Dart Drop | ExxonMobil | | |
| Stainless Steel | | | |
| Method B | | | |
| (g/mil) | | | |
| Puncture | ExxonMobil | | |
| BTEC Probe B1 | | | |
| Peak Force (lbs/mil) | | 11.12 | 11.16 |
| Break Energy (in-lbs/mil) | | 34.62 | 34.63 |
| Heat Seal | ExxonMobil | | |
| Seal initiation temperature at 1 N force (°C) | | <105 | 100.2 |
| Seal temperature at 5 N force (°C) | | 107.1 | 102.5 |
| Maximum seal force (N) | | 13.1 | 13.4 |
| Hot Tack | ExxonMobil | | |
| Hot tack initiation temperature at 1 N force (°C) | | 103.5 | 100.4 |

(continued)

| Film Property at 1.0 mil | | | |
|---|---|---|---|
| | | D3 @ 1 mil | 1018 @ 1 mil |
| Seal temperature at 5 N force (°C) | | 110.6 | 104.9 |
| Maximum hot tack force (N) | | 9.7 | 11.0 |

Table 6A

| Film Property at 3.0 mil | | | | |
|---|---|---|---|---|
| | | F1B5 @ 3 mil | E2B5 @ 3 mil | F1C4 @ 3 mil |
| | Method Used | | | |
| Gauge Mic (mils) | ASTM D6988 | | | |
| Average | | 3.0 | 3.1 | 3.1 |
| 1% Secant (psi) | ExxonMobil | | | |
| MD | | 30,931 | 29,283 | 32,530 |
| TD | | 37,640 | 31,819 | 38,091 |
| Avg | | 34,286 | 30,551 | 35,311 |
| Tensile | ExxonMobil | | | |
| Yield Strength(psi) | | | | |
| MD | | 1,359 | 1,293 | 1,396 |
| TD | | 1,543 | 1,486 | 1,614 |
| Elongation @ Yield (%) | | | | |
| MD | | 7.1 | 6.4 | 6.2 |
| TD | | 7.5 | 7.9 | 6.0 |
| Tensile Strength (psi) | | | | |
| MD | | 8,390 | 8,514 | 7,595 |
| TD | | 7,798 | 7,959 | 7,577 |
| Elongation @ Break (%) | | | | |
| MD | | 602 | 615 | 645 |
| TD | | 636 | 630 | 690 |
| Elmendorf Tear | ASTM D1922 | | | |
| MD (g/mil) | | 365 | 337 | 416 |
| TD (g/mil) | | 443 | 382 | 456 |
| Haze (%) | ASTM D1003 | >30% (30.9) | 21.6 | 28.0 |
| Internal (%) | ExxonMobil | 12.8 | 11.6 | 14.1 |
| Gloss (GU) | ASTM D2457 | | | |
| MD | | 29 | 47 | 35 |
| TD | | 26 | 44 | 35 |
| Dart Drop | ExxonMobil | | | |
| Phenolic | | | | |
| Method A | | | | |

(continued)

| Film Property at 3.0 mil | | F1B5 @ 3 mil | E2B5 @ 3 mil | F1C4 @ 3 mil |
|---|---|---|---|---|
| (g/mil) | | >455 | >440 | >440 |
| Dart Drop | ExxonMobil | | | |
| Stainless Steel | | | | |
| Method B | | | | |
| (g/mil) | | >453 | 382 | 252 |
| Puncture | ExxonMobil | | | |
| BTEC Probe B1 | | | | |
| Peak Force (lbs/mil) | | 7.57 | 7.97 | 7.97 |
| Break Energy (in-lbs/mil) | | 21.21 | 22.51 | 22.90 |
| Heat Seal | ExxonMobil | | | |
| Seal initiation temperature at 1 N force (°C) | | <85 | 95.6 | 88.0 |
| Seal temperature at 5 N force (°C) | | 90.6 | 100.4 | 94.0 |
| Maximum seal force (N) | | 28.7 | 28.9 | 30.7 |
| Hot Tack | ExxonMobil | | | |
| Hot tack initiation temperature at 1N force (°C) | | 86.0 | 96.4 | 91.7 |
| Seal temperature at 5 N force (°C) | | 93.9 | 102.5 | 102.0 |
| Maximum hot tack force (N) | | 17.9 | 15.5 | 17.7 |

Table 6B

| Film Property at 3.0 mil | | E2C4 @ 3 mil | D1D5 @ 3 mil | D2D5 @ 3 mil |
|---|---|---|---|---|
| | Method Used | | | |
| Gauge Mic (mils) | ASTM D6988 | | | |
| Average | | 3.2 | 3.2 | 3.2 |
| 1% Secant (psi) | ExxonMobil | | | |
| MD | | 30,037 | 33,415 | 31,575 |
| TD | | 32,602 | 38,323 | 35,002 |
| Avg | | 31,320 | 35,869 | 33,289 |
| Tensile | ExxonMobil | | | |
| Yield Strength(psi) | | | | |
| MD | | 1,421 | 1,414 | 1,420 |
| TD | | 1,614 | 1,699 | 1,621 |
| Elongation @ Yield (%) | | | | |
| MD | | 6.6 | 6.2 | 7.1 |
| TD | | 7.8 | 6.9 | 7.6 |
| Tensile Strength (psi) | | | | |
| MD | | 8,274 | 7,606 | 7,698 |

(continued)

| Film Property at 3.0 mil | | E2C4 @ 3 mil | D1D5 @ 3 mil | D2D5 @ 3 mil |
|---|---|---|---|---|
| TD | | 8,240 | 8,144 | 7,562 |
| Elongation @ Break (%) | | | | |
| MD | | 648 | 710 | 690 |
| TD | | 680 | 737 | 695 |
| Elmendorf Tear | ASTM D1922 | | | |
| MD (g/mil) | | 391 | 483 | 486 |
| TD (g/mil) | | 413 | 578 | 542 |
| Haze (%) | ASTM D1003 | 20.7 | 23.1 | 25.6 |
| Internal (%) | ExxonMobil | 12.7 | 11.7 | 11.2 |
| Gloss (GU) | ASTM D2457 | | | |
| MD | | 51 | 38 | 39 |
| TD | | 48 | 42 | 40 |
| Dart Drop | ExxonMobil | | | |
| Phenolic | | | | |
| Method A | | | | |
| (g/mil) | | >436 | 384 | >422 |
| Dart Drop | ExxonMobil | | | |
| Stainless Steel | | | | |
| Method B | | | | |
| (g/mil) | | 300 | 218 | 218 |
| Puncture | ExxonMobil | | | |
| BTEC Probe B1 | | | | |
| Peak Force (lbs/mil) | | 7.93 | 7.36 | 7.77 |
| Break Energy (in-lbs/mil) | | 22.52 | 20.65 | 22.38 |
| Heat Seal | ExxonMobil | | | |
| Seal initiation temperature at 1N force (°C) | | 97.4 | <75 | <90 |
| Seal temperature at 5 N force (°C) | | 100.8 | 77.0 | 92.7 |
| Maximum seal force (N) | | 30.3 | 31.4 | 30.6 |
| Hot Tack | ExxonMobil | | | |
| Hot tack initiation temperature at 1N force (°C) | | 101.8 | 77.8 | 91.6 |
| Seal temperature at 5 N force (°C) | | 106.3 | 88.3 | 100.8 |
| Maximum hot tack force (N) | | 15.2 | 10.4 | 17.3 |

Table 6C

| Film Property at 3.0 mil | | D1D4 @ 3 mil | D2D4 @ 3 mil | B1F5 @ 3 mil |
|---|---|---|---|---|
| | Method Used | | | |

(continued)

| Film Property at 3.0 mil | | | | |
|---|---|---|---|---|
| | | D1D4 @ 3 mil | D2D4 @ 3 mil | B1F5 @ 3 mil |
| Gauge Mic (mils) | ASTM D6988 | | | |
| Average | | 3.2 | 3.2 | 2.9 |
| 1% Secant (psi) | ExxonMobil | | | |
| MD | | 33,391 | 32,265 | 33,177 |
| TD | | 38,146 | 36,128 | 39,467 |
| Avg | | 35,769 | 34,697 | 36,322 |
| Tensile | ExxonMobil | | | |
| Yield Strength(psi) | | | | |
| MD | | 1,465 | 1,433 | 1,452 |
| TD | | 1,608 | 1,658 | 1,692 |
| Elongation @ Yield (%) | | | | |
| MD | | 6.1 | 5.8 | 6.7 |
| TD | | 5.7 | 7.5 | 6.3 |
| Tensile Strength (psi) | | | | |
| MD | | 7,398 | 7,695 | 6,948 |
| TD | | 7,347 | 7,178 | 6,503 |
| Elongation @ Break (%) | | | | |
| MD | | 707 | 701 | 866 |
| TD | | 739 | 709 | 852 |
| Elmendorf Tear | ASTM D1922 | | | |
| MD (g/mil) | | 431 | 455 | 452 |
| TD (g/mil) | | 522 | 479 | 596 |
| Haze (%) | ASTM D1003 | 24.1 | 21.6 | 22.5 |
| Internal (%) | ExxonMobil | 13.1 | 12.9 | 11.4 |
| Gloss (GU) | ASTM D2457 | | | |
| MD | | 40 | 48 | 41 |
| TD | | 42 | 46 | 41 |
| Dart Drop | ExxonMobil | | | |
| Phenolic | | | | |
| Method A | | | | |
| (g/mil) | | 283 | 301 | 128 |
| Dart Drop | ExxonMobil | | | |
| Stainless Steel | | | | |
| Method B | | | | |
| (g/mil) | | 152 | 154 | ≤115 |
| Puncture | ExxonMobil | | | |
| BTEC Probe B1 | | | | |
| Peak Force (lbs/mil) | | 7.73 | 7.89 | 7.00 |

(continued)

| Film Property at 3.0 mil | | D1D4 @ 3 mil | D2D4 @ 3 mil | B1F5 @ 3 mil |
|---|---|---|---|---|
| Break Energy (in-lbs/mil) | | 22.00 | 22.79 | 20.05 |
| Heat Seal | ExxonMobil | | | |
| Seal initiation temperature at 1N force (°C) | | <80 | 96.6 | <75 |
| Seal temperature at 5 N force (°C) | | 84.8 | 101.4 | 76.9 |
| Maximum seal force (N) | | 31.6 | 31.5 | 31.3 |
| Hot Tack | ExxonMobil | | | |
| Hot tack initiation temperature at N force (°C) | | 85.2 | 102.6 | 81.4 |
| Seal temperature at 5 N force (°C) | | 105.0 | 110.3 | 112.4 |
| Maximum hot tack force (N) | | 12.2 | 15.1 | 4.0 |

Table 6D

| Film Property at 3.0 mil | | C2F5 @ 3 mil | B1E4 @ 3 mil | C2E4 @ 3 mil |
|---|---|---|---|---|
| | Method Used | | | |
| Gauge Mic (mils) | ASTM D6988 | | | |
| Average | | 3.0 | 2.9 | 3.0 |
| 1% Secant (psi) | ExxonMobil | | | |
| MD | | 30,176 | 33,835 | 31,225 |
| TD | | 33,636 | 42,301 | 36,178 |
| Avg | | 31,906 | 38,068 | 33,702 |
| Tensile | ExxonMobil | | | |
| Yield Strength(psi) | | | | |
| MD | | 1,331 | 1,521 | 1,433 |
| TD | | 1,470 | 1,800 | 1,552 |
| Elongation @ Yield (%) | | | | |
| MD | | 6.4 | 6.1 | 6.7 |
| TD | | 6.3 | 6.2 | 6.2 |
| Tensile Strength (psi) | | | | |
| MD | | 7,403 | 7,347 | 7,668 |
| TD | | 7,123 | 7,218 | 7,111 |
| Elongation @ Break (%) | | | | |
| MD | | 782 | 827 | 767 |
| TD | | 776 | 859 | 779 |
| Elmendorf Tear | ASTM D1922 | | | |
| MD (g/mil) | | 477 | 386 | 445 |
| TD (g/mil) | | 566 | 513 | 510 |
| Haze (%) | ASTM D1003 | 23.5 | 19.5 | 18.6 |
| Internal (%) | ExxonMobil | 10.5 | 11.0 | 10.8 |

(continued)

| Film Property at 3.0 mil | | C2F5 @ 3 mil | B1E4 @ 3 mil | C2E4 @ 3 mil |
|---|---|---|---|---|
| Gloss (GU) | ASTM D2457 | | | |
| MD | | 39 | 48 | 56 |
| TD | | 45 | 50 | 57 |
| Dart Drop | ExxonMobil | | | |
| Phenolic | | | | |
| Method A | | | | |
| (g/mil) | | 214 | 117 | 201 |
| Dart Drop | ExxonMobil | | | |
| Stainless Steel | | | | |
| Method B | | | | |
| (g/mil) | | <210 | <114 | <119 |
| Puncture | ExxonMobil | | | |
| BTEC Probe B1 | | | | |
| Peak Force (lbs/mil) | | 7.62 | 8.00 | 8.34 |
| Break Energy (in-lbs/mil) | | 22.87 | 23.98 | 25.33 |
| Heat Seal | ExxonMobil | | | |
| Seal initiation temperature at 1N force (°C) | | <90 | 75.1 | 90.9 |
| Seal temperature at 5N force (°C) | | 91.2 | 84.0 | 96.7 |
| Maximum seal force (N) | | 32.0 | 32.3 | 31.6 |
| Hot Tack | ExxonMobil | | | |
| Hot tack initiation temperature at 1N force (°C) | | 89.5 | 112.1 | 95.6 |
| Seal temperature at 5N force (°C) | | 97.8 | 137.5 | 110.5 |
| Maximum hot tack force (N) | | 10.8 | 5.9 | 10.9 |

Table 6E

| Film Property at 3.0 mil | | D3 @ 3 mil | 1018 @ 3 mil |
|---|---|---|---|
| | Method Used | | |
| Gauge Mic (mils) | ASTM D6988 | | |
| Average | | 3.1 | 3.1 |
| 1% Secant (psi) | ExxonMobil | | |
| MD | | 29,941 | 26,933 |
| TD | | 30,168 | 28,802 |
| Avg | | 30,055 | 27,868 |
| Tensile | ExxonMobil | | |
| Yield Strength(psi) | | | |
| MD | | 1,403 | 1,351 |
| TD | | 1,486 | 1,370 |

(continued)

| Film Property at 3.0 mil | | D3 @ 3 mil | 1018 @ 3 mil |
|---|---|---|---|
| Elongation @ Yield (%) | | | |
| MD | | 6.0 | 6.4 |
| TD | | 6.3 | 6.5 |
| Tensile Strength (psi) | | | |
| MD | | 7,981 | 8,229 |
| TD | | 7,518 | 7,592 |
| Elongation @ Break (%) | | | |
| MD | | 678 | 633 |
| TD | | 700 | 655 |
| Elmendorf Tear | ASTM D1922 | | |
| MD (g/mil) | | 312 | 310 |
| TD (g/mil) | | 413 | 388 |
| Haze (%) | ASTM D1003 | 19.6 | 21.0 |
| Internal (%) | ExxonMobil | 11.9 | 9.7 |
| Gloss (GU) | ASTM D2457 | | |
| MD | | 51 | 44 |
| TD | | 50 | 44 |
| Dart Drop | ExxonMobil | | |
| Phenolic | | | |
| Method A | | | |
| (g/mil) | | 374 | >440 |
| Dart Drop | ExxonMobil | | |
| Stainless Steel | | | |
| Method B | | | |
| (g/mil) | | 156 | 285 |
| Puncture | ExxonMobil | | |
| BTEC Probe B1 | | | |
| Peak Force (lbs/mil) | | 8.16 | 8.44 |
| Break Energy (in-lbs/mil) | | 23.69 | 22.19 |
| Heat Seal | ExxonMobil | | |
| Seal initiation temperature at 1N force (°C) | | 111.5 | 106.7 |
| Seal temperature at 5 N force (°C) | | 115.6 | 110.6 |
| Maximum seal force (N) | | 31.3 | 31.8 |
| Hot Tack | ExxonMobil | | |
| Hot tack initiation temperature at 1N force (°C) | | 114.1 | 106.1 |
| Seal temperature at 5N force (°C) | | 121.5 | 111.7 |
| Maximum hot tack force (N) | | 8.1 | 11.5 |

For each inventive polyethylene blend described herein, the heat seal initiation temperature at 5 N and the hot tack initiation temperature at 1 N varied by only a few degrees Celsius between the blend's 1.0 mil film and the 3.0 mil film.

**EXAMPLE II**

As noted herein, the sealing strength and stiffness of the inventive polyethylene blends are important film characteristics. Therefore, these properties were investigated in blown films made from the inventive polyethylene blends of Example I. Specifically, FIG. 2A shows the heat seal initiation temperature at 5 N and MD/TD average 1% secant modulus of 1.0 mil and 3.0 mil films made from the inventive polyethylene blends and the references. FIG. 2B shows the hot tack initiation temperature at 1 N and MD/TD average 1% secant modulus of 1.0 mil and 3.0 mil films made from the inventive polyethylene blends and the references.

Both FIG. 2A and FIG. 2B indicate that the inventive polyethylene blends have improved sealing and stiffness capabilities than the references. All the films made from the inventive polyethylene blends had lower heat seal initiation temperatures at 5 N and lower hot tack initiation temperatures at 1 N than the references (meaning films made from the inventive polyethylene blends require less energy input to create the same strength seal) and higher MD/TD average 1% secant moduli (meaning films made from the inventive polyethylene blends require more energy input to deform the films by the same relative amount).

Furthermore, films made from polyethylene blends made from polyethylene compositions of a higher density spread between the two polyethylene compositions had improved heat sealing and stiffness in comparison with films made from polyethylene blends made from polyethylene compositions having a lower density spread between the two polyethylene compositions.

Generally, films made from polyethylene blends where a '1' polyethylene composition (~0.895 $g/cm^3$ density) and a '5' polyethylene composition (~0.950 $g/cm^3$ density) were blended had higher MD/TD average 1% secant moduli, lower heat seal initiation temperatures at 5 N, and lower hot tack initiation temperatures at 1 N than films made from polyethylene blends where a '2' polyethylene composition (~0.905 $g/cm^3$ density) and a '4' polyethylene composition (~0.935 $g/cm^3$ density) were blended. This result was surprising given the conventional wisdom that increasing density spread improved stiffness but at the cost of higher seal initiation temperatures.

For three 1.0 mil films made from the inventive polyethylene blends and one 1.0 mil film made from the reference polyethylene composition D3, heat seal curves and hot tack curves are shown in FIG. 3A and FIG. 3B. Each plot has a dashed line representing the 5 N strength point, which indicates that the three films made from the inventive polyethylene blends have lower heat seal initiation temperatures at 5 N and lower hot tack initiation temperatures at 1 N than the film made from the reference D3. Furthermore, the plots show three films made from the inventive polyethylene blends have lower heat seal initiation temperatures and lower hot tack initiation temperatures than the film made from the reference D3 at most seal strengths (notably, this trend only remains steady for hot tack initiation temperatures - once the seal has been initiated, the trend reverses), as well as higher maximum heat seal strengths and mostly higher maximum hot tack strengths than the film made from the reference D3.

**Claims**

1.  A film having an average MD/TD 1% secant modulus greater than or equal to 3300 psi and a heat seal initiation temperature at 5 N, or a hot tack seal initiation temperature at 1 N, of less than or equal to 95°C, comprising a polyethylene blend, the polyethylene blend comprising two polyethylene compositions, each polyethylene composition having a density, wherein the density of each of the polyethylene compositions differs from the other in an amount between 0.050 $g/cm^3$ and 0.060 $g/cm^3$, and the polyethylene blend has a density between 0.918 $g/cm^3$ and 0.922 $g/cm^3$.

2.  The film of claim 1, wherein the polyethylene blend has an MI ($I_2$) between 0.90 g/10 min and 1.10 g/10 min.

3.  The film of claim 1 or 2, wherein each of the polyethylene compositions has a density between 0.890 $g/cm^3$ and 0.960 $g/cm^3$.

4.  The film of any one of the preceding claims, wherein each of the polyethylene compositions has an MI ($I_2$) between 0.1 g/10 min and 15.0 g/10 min.

5.  The film of any one of the preceding claims, wherein the film has a thickness of 1 mil or 3 mil.

6.  The film of any of the preceding claims, wherein the polyethylene blend has an $M_w/M_n$ between 2.5 and 4.0.

**7.** The film of any of the preceding claims, wherein the polyethylene blend has an $M_z/M_w$ between 1.8 and 3.0.

**8.** The film of claim 1 having a heat seal initiation temperature at 5 N of less than or equal to 95°C, and a hot tack seal initiation temperature at 1 N of less than or equal to 95°C, wherein the polyethylene blend has an MI ($I_2$) between 0.90 g/10 min and 1.10 g/10 min, and each of the two polyethylene compositions has a density between 0.890 g/cm$^3$ and 0.960 g/cm$^3$ and an MI ($I_2$) between 0.1 g/10 min and 15.0 g/10 min, wherein the density of each of the polyethylene compositions differs from the other in an amount of 0.055 g/cm$^3$.

**Patentansprüche**

**1.** Folie mit einem durchschnittlichen MD/TD 1%-Sekantenmodul größer als oder gleich 3300 psi und einer Heißsiegelinitiierungstemperatur bei 5 N oder einer Hot-Tack-Siegelinitiierungstemperatur bei 1 N kleiner als oder gleich 95°C, die ein Polyethylengemisch umfasst, wobei das Polyethylengemisch zwei Polyethylenzusammensetzungen umfasst, wobei jede Polyethylenzusammensetzung eine Dichte aufweist, wobei die Dichte von jeder der Polyethylenzusammensetzungen sich von der anderen um einem Betrag zwischen 0,050 g/cm$^3$ und 0,060 g/cm$^3$ unterscheidet und das Polyethylengemisch eine Dichte zwischen 0,918 g/cm$^3$ und 0,922 g/cm$^3$ aufweist.

**2.** Folie nach Anspruch 1, bei der das Polyethylengemisch einen MI ($I_2$) zwischen 0,90 g/10 min und 1,10 g/10 min aufweist.

**3.** Folie nach Anspruch 1 oder 2, bei der jede der Polyethylenzusammensetzungen eine Dichte zwischen 0,890 g/cm$^3$ und 0,960 g/cm$^3$ aufweist.

**4.** Folie nach einem der vorhergehenden Ansprüche, bei der jede der Polyethylenzusammensetzungen einen MI ($I_2$) zwischen 0,1 g/10 min und 15,0 g/10 min aufweist.

**5.** Folie nach einem der vorhergehenden Ansprüche, die eine Dicke von 1 mil (0,0254 mm) oder 3 mil (0,0762 mm) aufweist.

**6.** Folie nach einem der vorhergehenden Ansprüche, bei der das Polyethylengemisch ein $M_w/M_n$ zwischen 2,5 und 4,0 aufweist.

**7.** Folie nach einem der vorhergehenden Ansprüche, bei der das Polyethylengemisch ein $M_z/M_w$ zwischen 1,8 und 3,0 aufweist.

**8.** Folie nach Anspruch 1 mit einer Heißsiegelinitiierungstemperatur bei 5 N kleiner als oder gleich 30 bis 95°C, und einer Hot-Tack-Siegelinitiierungstemperatur bei 1 N kleiner als oder gleich 95°C, wobei das Polyethylengemisch einen MI ($I_2$) zwischen 0,90 g/10 min und 1,10 g/10 min aufweist, und jede der zwei Polyethylenzusammensetzungen eine Dichte zwischen 0,890 g/cm$^3$ und 0,960 g/cm$^3$ und einen MI ($I_2$) zwischen 0,1 g/10 min und 15,0 g/10 min aufweist, wobei die Dichte von jeder der Polyethylenzusammensetzungen sich von der anderen um einen Betrag von 0,055 g/cm$^3$ unterscheidet.

**Revendications**

**1.** Film ayant un module sécant à 1 % MD/TD moyen supérieur ou égal à 3 300 psi et une température d'initiation de thermoscellage à 5 N, ou une température d'initiation de scellement par collage à chaud à 1 N, inférieure ou égale à 95 °C, comprenant un mélange de polyéthylènes, le mélange de polyéthylènes comprenant deux compositions de polyéthylène, chaque composition de polyéthylène ayant une densité, dans lequel la densité de chacune des compositions de polyéthylène diffère de l'autre en une quantité comprise entre 0,050 g/cm$^3$ et 0,060 g/cm$^3$, et le mélange de polyéthylènes a une densité comprise entre 0,918 g/cm$^3$ et 0,922 g/cm$^3$.

**2.** Film selon la revendication 1, dans lequel le mélange de polyéthylènes a un MI ($I_2$) compris entre 0,90 g/10 min et 1,10 g/10 min.

**3.** Film selon la revendication 1 ou 2, dans lequel chacune des compositions de polyéthylène a une densité comprise entre 0,890 g/cm$^3$ et 0,960 g/cm$^3$.

**4.** Film selon l'une quelconque des revendications précédentes, dans lequel chacune des compositions de polyéthylène a un MI ($I_2$) compris entre 0,1 g/10 min et 15,0 g/10 min.

**5.** Film selon l'une quelconque des revendications précédentes, dans lequel le film a une épaisseur de 1 mil ou 3 mil.

**6.** Film selon l'une quelconque des revendications précédentes, dans lequel le mélange de polyéthylènes a un rapport $M_w/M_n$ compris entre 2,5 et 4,0.

**7.** Film selon l'une quelconque des revendications précédentes, dans lequel le mélange de polyéthylènes a un rapport $M_z/M_w$ compris entre 1,8 et 3,0.

**8.** Film selon la revendication 1, ayant une température d'initiation de thermoscellage à 5 N inférieure ou égale à 95 °C, et une température d'initiation de scellement par collage à chaud à 1 N inférieure ou égale à 95 °C, dans lequel le mélange de polyéthylènes a un MI ($I_2$) compris entre 0,90 g/10 min et 1,10 g/10 min, et chacune des deux compositions de polyéthylène a une densité comprise entre 0,890 g/cm$^3$ et 0,960 g/cm$^3$ et un MI ($I_2$) compris entre 0,1 g/10 min et 15,0 g/10 min, la densité de chacune des compositions de polyéthylène différant de l'autre en une quantité de 0,055 g/cm$^3$.

FIG. 1

FIG. 2A

FIG. 2B

FIG. 3A

FIG. 3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9821274 A1
- US 5747594 A
- US 5008204 A
- US 6936675 B
- US 6528597 B
- US 8431661 B2
- US 6248845 B1
- WO 9303093 A
- US 4115639 A
- US 4077904 A
- US 4482687 A
- US 4564605 A
- US 4721763 A
- US 4879359 A
- US 4960741 A
- US 2285721 A
- US 3242099 A
- US 3231550 A
- US 7858719 B
- US 4530914 A
- US 4871705 A
- US 4937299 A
- US 5017714 A
- US 5055438 A
- US 5096867 A
- US 5120867 A
- US 5124418 A
- US 5198401 A
- US 5210352 A
- US 5229478 A
- US 5264405 A
- US 5278264 A
- US 5278119 A
- US 5304614 A
- US 5324800 A
- US 5347025 A
- US 5350723 A
- US 5384299 A
- US 5391790 A
- US 5391789 A
- US 5399636 A
- US 5408017 A
- US 5491207 A
- US 5455366 A
- US 5534473 A
- US 5539124 A
- US 5554775 A
- US 5621126 A
- US 5684098 A
- US 5693730 A
- US 5698634 A
- US 5710297 A
- US 5712354 A
- US 5714427 A
- US 5714555 A
- US 5728641 A
- US 5728839 A
- US 5753577 A
- US 5767209 A
- US 5770753 A
- US 5770664 A
- EP 0591756 A
- EP 0520732 A
- EP 0420436 A
- EP 0485822 B1
- EP 0485823 B1
- EP 0743324 A2
- EP 0518092 B1
- WO 9104257 A
- WO 9200333 A
- WO 9308221 A
- WO 9308199 A
- WO 9401471 A
- WO 9620233 A
- WO 9715582 A
- WO 9719959 A
- WO 9746567 A
- WO 9801455 A
- WO 9806759 A
- WO 98011144 A

**Non-patent literature cited in the description**

- **WILD et al.** *J. Poly. Sci., Poly. Phys. Ed.*, 1982, vol. 20, 441
- CRC HANDBOOK OF CHEMISTRY AND PHYSICS. CRC Press, 2000
- *Macromolecules*, 2001, vol. 34 (19), 6812
- **T. SUN** ; **P. BRANT** ; **R. R. CHANCE** ; **W. W. GRAESSLEY**. *Macromolecules*, 2001, vol. 34 (19), 6812-6820
- **M.B. HUGLIN**. LIGHT SCATTERING FROM POLYMER SOLUTIONS. Academic Press, 1971

- **SUN et al.** Effect of Short Chain Branching on the Coil Dimensions of Polyolefins in Dilute Solution. *Macromolecules*, 2001, vol. 34 (19), 6812-6820

- Polypropylene Handbook. Hanser Publishers, 1996, 76-78